# EUROPÄISCHE PATENTSCHRIFT

(11) **EP 2 753 443 B1**
(45) Veröffentlichungstag und Bekanntmachung des Hinweises auf die Patenterteilung: **15.11.2017**
(21) Anmeldenummer: 12829611.8
(22) Anmeldetag: 06.09.2012
(51) Int. Cl.: B22F 3/10, C04B 35/634, C08L 59/00, B22F 3/00, C04B 35/00

(54) **BINDEMITTEL UND VERFAHREN ZUR HERSTELLUNG VON METALLISCHEN ODER KERAMISCHEN FORMKÖRPERN IM PULVERSPRITZGUSS**
BINDERS AND PROCESSES FOR PRODUCING METALLIC OR CERAMIC MOLDINGS IN POWDER INJECTION MOLDING
LIANTS ET PROCÉDÉS DE FABRICATION DE CORPS MOULÉS MÉTALLIQUES OU CÉRAMIQUES PAR MOULAGE PAR INJECTION DE POUDRES

(30) Priorität: 07.09.2011 EP 11180380
(43) Veröffentlichungstag der Anmeldung: 16.07.2014
(73) Patentinhaber: BASF SE, 67056 Ludwigshafen am Rhein (DE)
(72) Erfinder: TER MAAT, Johan, 68163 Mannheim (DE); BLÖMACHER, Martin, 67149 Meckenheim (DE); WOHLFROMM, Hans, 68163 Mannheim (DE); NOHE, Mario, 67259 Heuchelheim (DE); LOOS, Robert, 67067 Ludwigshafen (DE)
(86) Internationale Anmeldenummer: PCT/IB2012/054603
(87) Internationale Veröffentlichungsnummer: WO 2013/035059

(56) Entgegenhaltungen:
- EP-A2- 0 465 940
- WO-A1-01/81467
- WO-A1-2008/006776
- JP-A- 2002 069 145
- JP-A- 2002 069 145
- US-A1- 2008 227 906
- US-A1- 2008 227 906
- US-A1- 2009 288 739

## Beschreibung

Die vorliegende Erfindung betrifft Bindemittel für pulverförmige Metalle oder pulverförmige Metalllegierungen oder pulverförmige Keramiken, diese Bindemittel enthaltende thermoplastische Massen für die Herstellung metallischer oder keramischer Formkörper, ihre Verwendung und Verfahren zur Herstellung von Formkörpern daraus.

Metallische bzw. keramische Formkörper können durch Spritzgießen, Extrudieren oder Verpressen von thermoplastischen Massen hergestellt werden, die neben Metallpulvern und/oder Keramikpulvern ein organisches Bindemittel aufweisen. Es handelt sich um hochgefüllte organische Polymerformmassen.

Nach dem Formen der thermoplastischen Masse zu einem Grünteil wird das organische Bindemittel zu einem Teil in einer Primärentbinderung entfernt und das erhaltene entbinderte Grünteil (= Braunteil) wird weiter behandelt.

Das Braunteil enthält noch eine Binderkomponente, die in der Primärentbinderung nicht entfernt wird. Dieser Restbinder soll die Pulverpartikel in dem Formteil zusammenhalten und wird üblicherweise durch thermische Zersetzung ausgetrieben.

Das nun erhaltene, vollständig entbinderte Braunteil (= Weißteil) wird gesintert. Oft, aber nicht immer, ist die thermische Zersetzung des Restbinders in den Sinterzyklus integriert.

Die ersten Bindemittel für das Pulverspritzgussverfahren basierten im Allgemeinen auf Mischungen von Polyethylen oder Polypropylen und Wachs. Dabei wird der Grünkörper durch Ausschmelzen zunächst vom Wachs befreit und der Restbinder durch eine langsame Pyrolyse ausgebrannt. Für das Ausschmelzen müssen die Grünteile in einem Pulverbett eingelagert werden, weil die Grünfestigkeit durch das Schmelzen praktisch nicht gegeben ist. Spätere Bindersysteme für die thermische Entbinderung verzichten auf das Ausschmelzen, weil das aufwändige Einbetten der Grünteile in Pulver und nachfolgende Ausgraben viel zu zeitaufwendig sind.

Üblicherweise besteht ein verbessertes Bindersystem für die vollständige thermische Entbinderung aus mehreren Komponenten z.B. aus Polyoxymethylen (POM), Polypropylen, Wachsen und Harzen wie in DE 199 25 197 beschrieben. Diese Komponenten werden sukzessive beim Aufheizen bei unterschiedlichen Temperaturen aus dem Formkörper freigesetzt, so dass der üblicherweise geringere Binderbestandteil noch bis mindestens 400 °C vorhanden ist und als Restbinder gesehen werden kann. Eine rein thermische Entbinderung dauert 1 bis 3 Tage und ist somit extrem langsam.

Ein noch weiter verbessertes Verfahren stellt die Lösungsmittelentbinderung dar, bei welcher Bindemittelsysteme, welche Binderkomponenten unterschiedlicher Löslichkeit enthalten, eingesetzt werden. Zur Entbinderung des Grünteils wird zunächst eine Binderkomponente durch Lösungsmittelextraktion entfernt, wonach die verbleibende, nicht oder sehr schlecht in dem Lösungsmittel lösliche Restbinderkomponente wiederum durch eine langsame thermische Zersetzung aus dem Formteil entfernt wird (z.B. US 4,197,118 oder EP 501 602). Dabei wird der Schmelzebereich des Restbinders durchschritten und eine plastische Verformung des Pulverformteils ist dadurch unumgänglich.

WO 2011/016718 A1 beschreibt ein Verfahren zur Herstellung von metallischen oder keramischen Formkörpern, bei welchem aus einem metallischen oder keramischen Sinterpulver mit einer Bindermischung aus einem Polymer wie z.B. Polyoxymethylen (POM oder auch Polyacetal) und einem nicht-polymeren Lösungsmittel für das Polymer (Molmasse < 300 g/mol, Schmelzpunkt > RT) eine Formmasse gebildet wird. Der Binder enthält vorzugsweise jeweils mindestens 5 Gew.-% des Polymers und des nicht-polymeren Lösungsmittels. Das nicht-polymere Lösungsmittel wird verdampft (z.B. bei 69 bis 130°C) oder kann aus der Formmasse mit einem weiteren Lösungsmittel herausgelöst oder verdünnt werden. Das verbleibende Polymer wird durch eine thermische Entbinderung, vorzugsweise oberhalb 200 °C, entfernt. In den Beispielen mit einem Metallpulver, POM als Binderkomponente neben Caprolactam (Gew.-Anteile 50:50) wird die 2-stufige thermische Entbinderung mit einer Verdampfung bei 69 bis 130°C und einer thermischen Entbinderung ≥ 240°C offenbart.

Von Nachteil bei diesem Verfahren ist, dass solche Binder beim Mischen mit dem Sinterpulver und bei der Verarbeitung auf der Spritzgießmaschine bereits das nicht polymere Lösungsmittel verdampfen. Die niedermolekulare Komponente wird an der Grünteiloberfläche ausgeschwitzt und verschmutzt die Spritzgießform. Darüber hinaus ist die Grünteilfestigkeit deutlich verringert.

Eine komplett thermische Binderentfernung wird auch mit Polyoxymethylenbindern am Beispiel von Keramikpulvern bei Temperaturen von 160 bis 220 °C in Gegenwart von Luft bzw. bei 300 bis 360 °C in Gegenwart von Stickstoff beschrieben (US 5,080,846 A und WO 91/07364 A1).

Y. Kankawa (Journal of the Japan Society of Powder Metallurgy 43/7 (1996) 840-845 berichtet über Untersuchungen einer thermischen Entbinderung in Luft von einem Metallpulver (SUS316L) mit u.a. Polyacetal als Binderkomponente bei 300 bis 320 °C.

Wie bereits zuvor ausgeführt, ist die rein thermische Binderentfernung sehr langsam und eine Verformung der Formkörper tritt sehr häufig auf, da die Temperaturen bei der thermischen Entbinderung (> 200 °C) der metallischen Formmassen in einem Temperaturbereich weit oberhalb des Schmelzebereichs von Polyacetal (160 bis 170 °C) liegen.

Darüber hinaus stellt die thermische Entbinderung in einer sauerstoffhaltigen Atmosphäre bei Verwendung von Metallpulvern, in Gegensatz zu Keramikpulvern, ein Problem dar, weil die Pulveroberfläche bei dem Vorgang im Allgemeinen oxidiert wird und damit die Qualität und Integrität des gesinterten Formteils beeinträchtigt wird.

Ein weiteres Verfahren zur Entbinderung des Grünteils gemäß dem Stand der Technik beruht auf einer katalytischen Entbinderung durch Behandlung des Grünteils in einer gasförmigen, säurehaltigen Atmosphäre bei erhöhter Temperatur. Formmassen für die katalytische Entbinderung kommen mit noch weniger Restbinder aus. Im Allgemeinen liegt der Restbindergehalt um die 10 %, der Rest besteht üblicherweise aus Polyacetal.

EP-A 0 413 231 offenbart beispielsweise ein Verfahren zur Herstellung eines anorganischen Sinterformteils, bei welchem ein Gemisch aus einem sinterbaren anorganischen Pulver und Polyoxymethylen als Bindemittel zu einem Grünkörper verformt wird und das Bindemittel dann durch Behandeln des Grünkörpers in einer gasförmigen, säurehaltigen z.B. Bortrifluorid oder HNO3, enthaltenden Atmosphäre entfernt wird. Anschließend wird der so behandelte Grünkörper versintert. Beispiele für sinterförmige Pulver sind sowohl oxidische Keramikpulver wie Al₂O₃, ZrO₂, Y₂O₃ als auch nicht-oxidische Keramikpulver wie SiC, Si₃N₄, und Metallpulver.

JP 2002 069145 A beschreibt Polyacetalcopolymere, enthaltend Struktureinheiten von Trioxan (A), einer hydroxyl- und carboxylgruppenhaltigen Verbindung (b1) oder einem Lacton (b2) als Komponente (B) und einem cyclischen Ether (C). Die Copolymere werden als Adhäsive zum Verschweißen von Metallplatten eingesetzt.

Mit einer ausschließlich aus POM bestehenden Binderphase werden jedoch in der Praxis keine zufriedenstellenden Ergebnisse erhalten, da die Braunteilfestigkeit völlig unzureichend ist und die Sinterdichten zu niedrig sind.

EP-A 0 444 475 beschreibt für keramische Formkörper geeignete Binderzusammensetzungen, die neben Polyoxymethylen als zusätzliches lösliches Polymerisat Poly-1,3-Dioxolan, Poly-1,3-Dioxan oder Poly-1,3-Dioxepan enthalten oder als in Polyoxymethylen dispergierbares Polymerisat aliphatische Polyurethane, aliphatische Polyepoxide, Poly(C₂-C₆-alkylenoxide), aliphatische Polyamide oder Polyacrylate oder deren Mischungen enthalten.

In der EP 0 465 940 A1 und DE 100 19 447 A1 werden thermoplastische Formmassen für die Herstellung metallischer Formkörper beschrieben, die neben einem sinterbaren pulverförmigen Metall oder einer pulverförmigen Metalllegierung eine Mischung aus Polyoxymethylenhomo- oder copolymerisaten und einem damit nicht mischbaren Polymerisat als Bindemittel enthalten. Als zusätzliches Polymerisat kommen Polyolefine, insbesondere Polyethylen und Polypropylen, wie auch Polymerisate von Methacrylsäureestern wie PMMA, in Betracht (EP 0 465 940 A1). DE 100 19 447 A1 beschreibt Bindemittel für anorganische Materialpulver zur Herstellung metallischer und keramischer Formkörper, wobei diese Bindemittel eine Mischung aus Polyoxymethylenhomo- oder Copolymerisaten und einem Polymersystem aus Polytetrahydrofuran und mindestens einem Polymer aus C₂₋₈-Olefinen, vinylaromatischen Monomeren, Vinylestern aliphatischer C₁₋₈-Carbonsäuren, Vinyl-C₁₋₈-Alkylethern oder C₁₋₁₂-Alkyl(meth)acrylaten enthalten.

WO 2008/006776 A1 beschreibt Bindemittel für anorganische Materialpulver zur Herstellung metallischer Formkörper, wobei diese Bindemittel eine Mischung aus Polyoxymethylenhomo- oder Copolymerisaten und einem Polymersystem aus C₂₋₈-Olefinen und Poly-1,3-Dioxepan oder Poly-1,3-Dioxolan sind.

Die Entbinderung der Grünteile erfolgt bei Verwendung der vorgenannten Polyoxymethylen-Bindemittelsysteme katalytisch durch Behandlung des Grünteils in einer gasförmigen, säurehaltigen Atmosphäre von z.B. Halogenwasserstoffen, Ameisensäure oder Salpetersäure bei erhöhter Temperatur. Dabei werden die Polyoxymethylenhomo- oder copolymerisate rückstandsfrei depolymerisiert, gefolgt von einer thermischen Restentbinderung des zurückbleibenden Polymerisats. Auch hier wird der Schmelzebereich des Restbinders durchschritten und eine gewisse plastische Verformung des Pulverformteils ist dadurch unumgänglich. Der Restbindergehalt beträgt nach der katalytischen Entfernung des Erstbinders im Allgemeinen etwa 10% und ist somit geringer als nach einer Lösungsmittelentbinderung des Erstbinders, bei welcher der Restbinderanteil üblicherweise 30 bis 70 % beträgt. Ein geringerer Restbindergehalt hat den Vorteil, dass die plastische Verformung des Formteils üblicherweise weniger ausgeprägt ist.

Eine katalytische Entbinderung von Formteilen mit Oxalsäure wird in der WO 94/25205 beschrieben. Die katalytische Entbinderung mit Oxalsäure ist im direkten Vergleich mit HNO₃ jedoch deutlich langsamer und Oxalsäure ist als Feststoff problematisch in der Dosierung, so dass sie bisher nicht zum industriellen Einsatz gekommen ist.

US 2008/0075620 A1 beschreibt eine katalytische Entbinderung eines durch Pulverspritzguss erhaltenen Formteils mit Ozon zur Entfernung von Polyethern, Polylactiden und/oder aliphatischen Polycarbonaten als erster Binderkomponente. Polyetherkomponenten auf Polyacetalbasis sind bevorzugt. Die Binderphase kann noch einen zweiten Binder mit einer höheren thermischen Zersetzungstemperatur als die erste Binderkomponente enthalten, welcher in einem nachfolgenden Entbinderungsschritt entfernt wird. Der zweite Binder ist vorzugsweise Polystyrol und/oder ein Polyolefin. Der Anteil der ersten Komponente in der Binderphase beträgt 20 Gew.-% oder mehr. Mischungen von Bindern, die Polyether bzw. Polyacetale und Polyester enthalten, werden nicht näher beschrieben.

US 2008/0227906 A1 beschreibt die katalytische Entbinderung von durch Pulverspritzguss erhaltenen Formteilen mit einem alkalischen Gas wie z.B. Ammoniak zur Entfernung von einer ersten Binderkomponente, welche vorzugsweise auf aliphatischen Polyestern und/oder Polyethern basiert. Bevorzugt sind Polyester, insbesondere Polycarbonate und Polyhydroxysäuren wie Polyglycolid und Polylactid. Die Binderphase kann einen zweiten Binder enthalten, welcher eine höhere Zersetzungstemperatur als der erste Binder aufweist und in einem späteren Entbinderungsschritt bei höherer Temperatur entfernt wird. Der zweite (Rest)binder ist vorzugsweise Polystyrol und/oder ein Polyolefin. Der Anteil des Erstbinders in der Binderphase beträgt 20 Gew.-% oder mehr. Mischungen von Bindern, die Polyether und Polyester enthalten, werden nicht näher beschrieben.

Ein weiteres Entbinderungsverfahren zur Entfernung von Polycarbonaten mit einem alkalischen Gas wird in US 2008/0226489 A1 beschrieben.

Der Restbinder wird gemäß dem Stand der Technik ausnahmslos durch thermische Zersetzung entfernt. Die Temperatur, welche zur Entfernung des Restbinders aus dem Formteil benötigt wird, ist abhängig vom gewählten Polymer und von der Wahl des Ofenschutzgases, liegt aber üblicherweise im Temperaturbereich von 300 bis 600°C, insbesondere 400 bis 500°C.

Die Restentbinderung kann getrennt in einem eigens dafür installierten Ofen stattfinden, insbesondere wenn der Gehalt an Restbinder 30 Gew.-% oder mehr beträgt. Das hat den Vorteil, dass der Sinterofen nicht mit pyrolysierten organischen Substanzen verunreinigt werden kann, die sich bevorzugt an kälteren Stellen sammeln und durch Reinigungsvorgänge regelmäßig entfernt werden müssen. Außerdem ist ohne Pyrolyse des Restbinders im Sinterofen ein schnelleres Aufheizen und damit eine kürzere Zykluszeit und höhere Kapazität der Sinteranlage möglich.

Der Bauteileproduzent muss nun bereits in einem sehr frühen Stadium festlegen, welche primäre Entbinderungsmethode er verwenden will; die Systemfrage stellt sich unverzüglich. Somit gibt es Produzenten, welche die katalytische Entbinderung einsetzen und den Restbinder im Sinterofen entfernen. Ferner gibt es Produzenten, die eine Lösungsmittelvorentbinderung mit nachfolgender Pyrolyse des Restbinders in einem Ausbrandofen vor dem abschließenden Sintern bevorzugen, und darüber hinaus diejenigen, welche nach einer Lösungsmittelvorentbinderung den Restbinder im Braunteil im Sinterofen austreiben.

Gebrauchsfertige Granulate für die katalytische Entbinderung sind am Markt erhältlich. Betreiber einer Lösungsmittelentbinderung sind in der Regel rückwärts integriert und fertigen Ihre Granulate selbst aus zugekauften Pulvern und Bindemittelkomponenten; es gibt aber auch bereits die ersten gebrauchsfertigen Granulate für Lösungsmittelentbinderungen am Markt.

Die Systemwahl hat implizit den Nachteil, dass ein rückwärts integrierter Betreiber einer Lösungsmittelentbinderungs-Anlage kommerziell verfügbare Formteilmassen mit einer großen Auswahl an verschiedenen Metalllegierungen und auch Keramiken wie die Granulate, die für die katalytische Entbinderung vorgesehen sind, nicht oder nur unter erheblichem finanziellen Aufwand zur Produktionsreife bringen könnte.

Der rückwärts integrierte Produzent hat somit die Wahl zwischen einer eigenen, kostenintensiven Produktentwicklung und der Investition in zusätzliche neue Entbinderungsanlagen oder er muss sich unflexibel auf eine kleinere Produktpalette einschränken

Es besteht somit die Aufgabe ein verbessertes Bindemittel zur Herstellung von metallischen oder keramischen Formkörpern zu entwickeln, welches universell und flexibel einsetzbar ist und somit die freie Wahl der gängigen Methoden zur Binderentfernung ermöglicht.

Gegenstand der Erfindung ist ein Bindemittel B zur Herstellung keramischer oder metallischer Formkörper enthaltend
B₁) 40 bis 95 Gew.-% mindestens eines Polyoxymethylenhomo- oder -copolymerisats;
B₂) 2 bis 60 Gew.-% mindestens eines Polyethers ausgewählt aus Poly-1,3-dioxolan, Poly-1,3-dioxan, Poly-1,3-dioxepan, Polytetrahydrofuran, Poly-p-dioxanon und deren Copolymeren,
B₃) 2 bis 15 Gew.-% mindestens eines aliphatischen Polyesters ausgewählt aus:
   Polyhydroxyalkanoaten enthaltend Struktureinheiten der Formel (I) 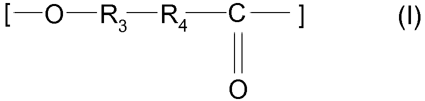 wobei R₃ die Gruppierung -(CH)_{y}(CH₂)ₓCH₃, worin x eine ganze Zahl von 0 bis 2 und y eine ganze Zahl von 0 bis 1 ist, und R₄ die Gruppierung (-CH₂-)_{z}, worin z eine ganze Zahl von 1 bis 5 ist, bedeutet;
   Polykondensaten enthaltend Struktureinheiten der Formel (II) 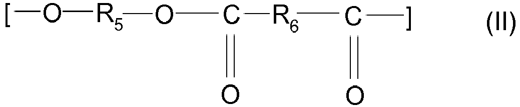 wobei R₅ die Gruppierung (-CH₂-)ₘ, worin m eine ganze Zahl von 2 bis 4 ist, und R₆ die Gruppierung (-CH₂-)_{n,} worin m eine ganze Zahl von 2 bis 4 ist, bedeutet;
   Polyalkylencarbonaten enthaltend Struktureinheiten der allgemeinen Formel (III) 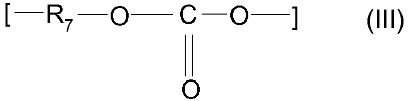 wobei R₇ ein (C₁-C₆)-Alkylenrest ist;
   sowie deren Stereoisomeren und Copolymeren,
   wobei die Summe der Komponenten B₁), B₂) und B₃) 100 Gew.-% ergibt.

Der Anteil der Komponente B₁) beträgt bevorzugt 50 bis 90 Gew.-%, besonders bevorzugt 50 bis 80 Gew.-%, bezogen auf die Gesamtmenge des Bindemittels B).

Der Anteil der Komponente B₂) beträgt bevorzugt 5 bis 50 Gew.-%, besonders bevorzugt 15 bis 45 Gew.-%, bezogen auf die Gesamtmenge des Bindemittels B).

Der Anteil der Komponente B₃) beträgt bevorzugt 3 bis 12 Gew.-%, besonders bevorzugt 4 bis 10 Gew.-%, bezogen auf die Gesamtmenge des Bindemittels B).

Die Polyoxymethylenhomo- oder copolymerisate (POM) der Komponente B₁) sind als solche bekannt und handelsüblich. Die Homopolymeren werden üblicherweise durch Polymerisation von Formaldehyd oder Trioxan hergestellt, vorzugsweise in der Gegenwart von geeigneten Katalysatoren. Im Rahmen der Erfindung bevorzugte Polyoxymethylen-Copolymere enthalten ebenfalls Trioxan und andere cyclische oder lineare Formalen bzw. sonstigen Formaldehyd-Quellen als Hauptmonomere. Die Bezeichnung Hauptmonomere soll ausdrücken, dass der Anteil dieser Monomere an der Gesamtmonomermenge, also der Summe von Haupt- und Comonomeren, größer ist als der Anteil der Comonomere an der Gesamtmonomermenge. Ganz allgemein weisen derartige POM-Polymere mindestens 50 mol-% an wiederkehrenden Einheiten - CH₂O- in der Polymerhauptkette auf. Geeignete Polyoxymethylenco-polymere werden in der EP-A 0 446 708 (Seite 3, Zeile 39 bis Seite 4, Zeile 31) beschrieben. Polyacetale sind am Markt beispielsweise von Fa. BASF unter dem Markennamen Ultraform® und von Fa. Ticona unter dem Markennamen Hostaform® erhältlich.

Geeignet als Komponente B₂) sind Polyether ausgewählt aus Poly-1,3-dioxolan, Poly-1,3-dioxan, Poly-1,3-dioxepan, Polytetrahydrofuran, Poly-p-dioxanon und deren Copolymeren. Die Komponente B₂) ist säurekatalytisch zumindest teilweise zersetzbar. Die mittleren Molekulargewichte (Gewichtsmittelwert) der Polyether B₂) betragen vorzugsweise 600 bis 100.000 g/mol, insbesondere 2000 bis 60.000 g/mol.

Unter den vorgenannten Polyethern B₂) sind Poly-1,3-dioxolan, Poly-1,3-dioxepan und Polytetrahydrofuran bevorzugt.

Entsprechende Produkte sind im Handel erhältlich oder leicht herstellbar. Polytetrahydrofuran kann von Fa. BASF unter dem Markennamen PolyTHF® bezogen werden; Poly-p-dioxanon ist bei Fa. Evonik unter dem Markennamen Resomer® erhältlich.

Die entsprechenden Herstellungsverfahren, insbesondere von Polyethern auf Basis von 1,3-Dioxepan, 1,3-Dioxan, sowie 1,3-Dioxolan, verlaufen ähnlich wie bereits für Polyacetal beschrieben und sind dem Fachmann bekannt, so dass sich hier nähere Angaben erübrigen. Es können auch Mischungen von verschiedenen Polyethern und/oder von Polyethern verschiedener Molekulargewichte eingesetzt werden.

Geeignet als Komponente B₃) sind prinzipiell alle aliphatischen Polyester. Insbesondere geeignet sind Polyhydroxyalkanoate enthaltend Struktureinheiten der Formel (I) 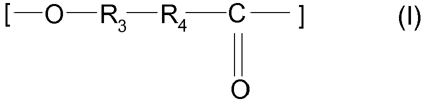 wobei R₃ die Gruppierung -(CH)y(CH₂)ₓCH₃, worin x eine ganze Zahl von 0 bis 2 und y eine ganze Zahl von 0 bis 1 ist, und R₄ die Gruppierung (- CH₂ -)_{z}, worin z eine ganze Zahl von 1 bis 5 ist, bedeutet, sowie deren Mischungen, deren Stereoisomere und deren Copolymere.

Beispiele für diese Polyhydroxyalkanoate sind Polyglycolid, Polylactid, Poly-4-hydroxy-butanoat, Poly-3-hydroxybutanoat, Poly-3-hydroxyvalerat, Poly-3-hydroxyhexanoat und Polycaprolacton.

Beispiele der Copolymere sind Copolyester des (L, D)-Polylactids oder Copolyester der vorgenannten Hydroxybutanoate mit 3-Hydroxyvalerat oder 3-Hydroxyhexanoat oder Copolyester von Polyglycolid, Polylactid und Polylcaprolacton. Polyglycolid wird beispielsweise angeboten von Fa. Kureda unter den Markennamen Kuredux®; Polylactide in verschiedenen L-D-Verhältnissen werden angeboten von Fa. Natureworks unter dem Markennamen Ingeo®, verschiedenste Copolymere von Glycolid, L- und D-Lactid und Caprolacton werden angeboten von Fa. Evonik unter dem Markennamen Resomer®. Polycaprolactone sind erhältlich von Fa. Perstorp unter dem Markennamen CAPA®.

Poly-3-hydroxybutyrate-co-4-hydroxybutyrate sind insbesondere von der Fa. Metabolix bekannt. Sie werden unter dem Handelsnamen Mirel® vertrieben. Poly-3-hydroxy-butyrate-co-3-hydroxyhexanoate sind von der Fa. P&G oder Kaneka bekannt. Poly-3-hydroxybutyrate werden beispielsweise von der Fa. PHB Industrial unter dem Markennamen Biocycle® und von der Fa. Tianan unter dem Namen Enmat® vertrieben.

Weiterhin gut geeignete aliphatische Polyester sind die Polykondensate aus Dicarbonsäuren und Diolen enthaltend Struktureinheiten der Formel (II) 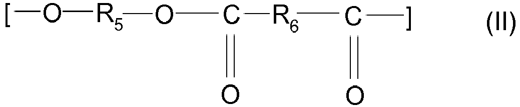 wobei R₅ die Gruppierung (-CH₂-)ₘ, worin m eine ganze Zahl von 2 bis 4 ist, und R₆ die Gruppierung (-CH₂-)_{n,} worin m eine ganze Zahl von 2 bis 4 ist, bedeutet, sowie deren Mischungen und deren Copolymere.

Beispiele für diese Polykondensate sind Polyethylen- und Polybutylenmalonat, Polyethylen- und Polybutylensuccinat, Polyethylen- und Polybutylenglutarat, Polyethylen- und Polybutylenadipat.

Geeignete Polybutylensuccinate und Polybutylensuccinat-co-adipate werden beispielsweise von der Fa. Showa Denko unter dem Markennamen Bionolle® vertrieben. Polyethylensuccinate und Polyethylensuccinat-co-adipat werden von der Fa. Nippon Shokubai unter dem Markennamen Lunare SE® angeboten.

Weitere geeignete Polyester sind aliphatische Polyalkylencarbonate enthaltend Struktureinheiten der allgemeinen Formel (III) 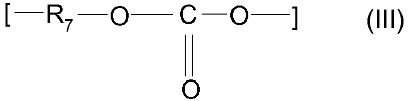 wobei R₇ ein (C₁-C₆)-Alkylenrest ist, sowie deren Mischungen und deren Copolymere.

Beispiele derartiger Polyalkylencarbonate sind Polyethylen- und Polypropylencarbonat. Geeignete Polyethylen- und Polypropylencarbonate werden beispielsweise von der Fa. Empower Materials Inc. unter dem Markennamen QPAC® angeboten.

Die aliphatischen Polyester B₃) weisen in der Regel ein Molekulargewicht (Gewichtsmittelwert) von 2.000 bis 1.000.000, vorzugsweise von 20.000 bis 100.000 auf.

Die Polyester B₃) sind bevorzugt ausgewählt aus Poly-(C₂-C₄)-alkylencarbonat, Poly-(C₂-C₄)-alkylensuccinat, Polylactid, Polycaprolacton und Polyhydroxybutanoat.

Gemäß einer bevorzugten Ausführungsform der Erfindung wird ein Bindemittel B zur Herstellung keramischer oder metallischer Formkörper bereitgestellt, enthaltend
B₁) 50 bis 90 Gew.-% mindestens eines Polyoxymethylenhomo- oder -copolymerisats;
B₂) 5 bis 50 Gew.-% mindestens eines Polyethers ausgewählt aus Poly-1,3-dioxolan, Poly-1,3-dioxepan und Polytetrahydrofuran und deren Copolymeren,
B₃) 3 bis 15 Gew.-% mindestens eines aliphatischen Polyesters ausgewählt aus: Poly-(C₂-C₄)-alkylencarbonat, Poly-(C₂-C₄)-alkylensuccinat, Polylactid, Polycaprolacton und Polyhydroxybutanoat sowie deren Stereoisomere und Copolymere,
wobei die Summe der Komponenten B₁), B₂) und B₃) 100 Gew.-% ergibt.

Weiterer Gegenstand der Erfindung ist eine thermoplastische Masse für die Herstellung metallischer oder keramischer Formkörper, enthaltend
A) 40 bis 65 Vol-% mindestens eines anorganischen sinterbaren Pulvers A
B) 35 bis 60 Vol-% einer Mischung aus
   B₁) 40 bis 95 Gew.-% mindestens eines Polyoxymethylenhomo- oder -copolymerisats;
   B₂) 2 bis 60 Gew.-% mindestens eines Polyethers ausgewählt aus: Polypropylenoxid, Poly-1,3-dioxolan, Poly-1,3-dioxan, Poly-1,3-dioxepan, Polytetrahydrofuran, Poly-p-dioxanon und deren Copolymeren;
   B₃) 2 bis 15 Gew.-% mindestens eines aliphatischen Polyesters ausgewählt aus:
      Polyhydroxyalkanoaten enthaltend Struktureinheiten der Formel (I) 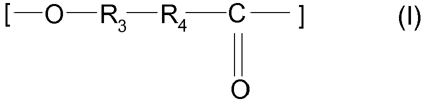 wobei R₃ die Gruppierung -(CH)y(CH₂)ₓCH₃, worin x eine ganze Zahl von 0 bis 2 und y eine ganze Zahl von 0 bis 1 ist, und R₄ die Gruppierung (-CH₂-)_{z}, worin z eine ganze Zahl von 1 bis 5 ist, bedeutet;
      Polykondensaten enthaltend Struktureinheiten der Formel (II) 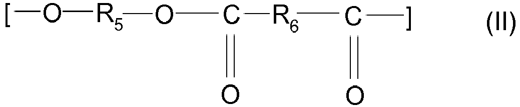 wobei R₅ die Gruppierung (-CH₂-)ₘ, worin m eine ganze Zahl von 2 bis 4 ist, und R₆ die Gruppierung (-CH₂-)_{n,} worin m eine ganze Zahl von 2 bis 4 ist, bedeutet;
      Polyalkylencarbonaten enthaltend Struktureinheiten der allgemeinen Formel (III) 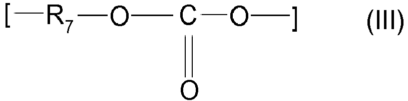 wobei R₇ ein (C₁ - C₆)-Alkylenrest ist,
      sowie deren Stereoisomeren und Copolymeren;
      und
C) 0 bis 5 Vol-% eines Dispergierhilfsmittels,
wobei die Summe der Komponenten A), B) und C) 100 Vol-% ergibt.

Das anorganische sinterbare Pulver A) kann aus allen bekannten geeigneten anorganischen sinterbaren Pulvern ausgewählt werden. Vorzugsweise ist es ausgewählt aus Metallpulvern, Metalllegierungspulvern, Metallcarbonylpulvern, keramischen Pulvern und Gemischen davon.

Als Metalle, die in Pulverform vorliegen können, seien beispielsweise Aluminium, Eisen, insbesondere Carbonyleisenpulver, Chrom, Cobalt, Kupfer, Nickel, Silizium, Titan und Wolfram genannt. Als pulverförmige Metalllegierungen sind beispielsweise hoch oder niedrig legierte Stähle sowie Metalllegierungen auf der Basis von Aluminium, Eisen, Titan, Kupfer, Nickel, Wolfram oder Kobalt zu nennen. Dabei sind sowohl Pulver von bereits fertigen Legierungen wie z.B. Superlegierungen wie IN713C, GMR 235 und IN 100 und die aus der Magnettechnik bekannten Legierungen mit den Hauptbestandteilen Nd-Fe-B und Sm-Co zu nennen, als auch Pulvermischungen der einzelnen Legierungsbestandteile zu nennen. Die Metallpulver, Metalllegierungspulver und Metallcarbonylpulver können auch im Gemisch eingesetzt werden.

Geeignete anorganische Pulver sind ferner oxidische Keramikpulver wie Al₂O₃, ZrO₂, Y₂O₃ aber auch nicht-oxidische Keramikpulver wie SiC, Si₃N₄, und komplexere Oxidpulver, wie NiZnFe₂O₄, sowie anorganische Farbpigmente, wie CoAl₂O₄.

Die Korngrößen der vorgenannten Pulver betragen vorzugsweise 0,1 bis 50 µm, besonders bevorzugt 0,3 bis 30 µm. Die Metallpulver, Metalllegierungspulver, Metallcarbonylpulver und keramische Pulver können auch im Gemisch, wie z.B. für die Herstellung von Hartmetallen wie WC / Co eingesetzt werden.

Das als Komponente C) gegebenenfalls vorliegende Dispergierhilfsmittel kann aus bekannten Dispergierhilfsmitteln ausgewählt sein. Beispiele sind oligomeres Polyethylenoxid mit einem mittleren Molekulargewicht von 200 bis 600, Stearinsäure, Stearinsäureamid, Hydroxystearinsäure, Fettalkohole, Fettalkoholsulfonate und Blockcopolymere von Ethylen- und Propylenoxid, sowie Polyisobutylen. Besonders bevorzugt wird das Dispergierhilfsmittel in einer Menge von 1 bis 5 Vol-%, bezogen auf die Komponenten A), B) und C), eingesetzt.

Zusätzlich können die thermoplastischen Massen auch übliche Zusatzstoffe und Verarbeitungshilfsmittel, die die rheologischen Eigenschaften der Mischungen bei der Formgebung günstig beeinflussen, enthalten.

Die erfindungsgemäßen thermoplastischen Massen können zur Herstellung von metallischen oder keramischen Formkörpern aus dem Pulver A) verwendet werden.

Die vorliegende Erfindung betrifft daher auch ein Verfahren zur Herstellung eines metallischen oder keramischen Formkörpers aus der erfindungsgemäßen thermoplastischen Masse durch Spritzgießen, Extrudieren oder Verpressen zu einem Formteil, anschließendes Entfernen des Bindemittels und Sintern, dadurch gekennzeichnet, dass man zum Entfernen des Bindemittels das Formteil nach einer der folgenden Varianten behandelt:
- Variante 1 mit den Schritten:
   1a) säurekatalysierte Entbinderung der Komponenten B₁ und B₂ aus dem Formteil und
   1b) anschließende thermische Entbinderung der Komponenten B₃ und gegebenenfalls C) bei 200 bis 600 °C,
   oder
- Variante 2 mit den Schritten:
   2a) Extraktion von mindestens 50 Gew.-% der Bindemittelkomponenten B₂) und B₃) und gegebenenfalls C) aus dem Formteil durch ein Lösungsmittel, in welchem die Komponente B₁) unlöslich ist,
   2b) Entfernung des Lösungsmittels aus dem Formteil durch Trocknen,
   2c) anschließende thermische zumindest teilweise Entbinderung der Komponente B1 bei 140 bis 200 °C aus dem Formteil in einer sauerstoffhaltigen Atmosphäre, und
   2d) gegebenenfalls thermische Entbinderung bei 200 bis 600 °C der gegebenenfalls noch vorhandenen Restmengen der Komponenten B₁), B₂), B₃) und/oder C),
   oder
- Variante 3 mit den Schritten:
   3a) zumindest teilweise Extraktion der Bindemittelkomponenten B₂) und B₃) und gegebenenfalls C) aus dem Formteil durch ein Lösungsmittel, in welchem die Komponente B₁) unlöslich ist,
   3b) Entfernung des Lösungsmittels aus dem Formteil durch Trocknen,
   3c) anschließende säurekatalysierte zumindest teilweise Entbinderung der Komponente B₁) und Restmengen von Komponente B₂) aus dem Formteil und
   3d) gegebenenfalls thermische Entbinderung bei 200 - 600°C der gegebenenfalls noch vorhandenen Restmengen der Komponenten B₁), B₂), B₃) und/oder C).

Die Herstellung der bei dem erfindungsgemäßen Verfahren eingesetzten erfindungsgemäßen thermoplastischen Masse kann auf übliche Weise in einem Kneter oder Extruder bei Temperaturen von 150 bis 200°C erfolgen (vgl. EP-A 0 413 231). Nach Abkühlen der Masse kann diese granuliert werden. Gemäß einer bevorzugten Ausführungsform kann die Herstellung der zu verformenden thermoplastischen Masse durch Aufschmelzen der Komponenten B) und Einmischen der Komponenten A) und gegebenenfalls C) erfolgen. Beispielsweise kann die Komponente B) in einem Zweischneckenextruder bei Temperaturen von vorzugsweise 150 bis 220°C, insbesondere 170 bis 200°C aufgeschmolzen werden. Die Komponente A) wird anschließend bei Temperaturen im gleichen Bereich in der erforderlichen Menge zu dem Schmelzestrom der Komponente B) dosiert. Vorteilhafterweise enthält die Komponente A) auf der Oberfläche das oder die Dispergierhilfsmittel C). Die Herstellung der thermoplastischen Massen kann aber auch durch Aufschmelzen der Komponenten B) und C) in Gegenwart der Komponente A) bei Temperaturen von 150 bis 220°C erfolgen.

Für die Formgebung der thermoplastischen Formmasse durch Spritzguss können die üblichen Schnecken- und Kolbenspritzgussmaschinen eingesetzt werden. Die Formgebung erfolgt im Allgemeinen bei Temperaturen von 175 bis 200°C und Drücken von 3.000 bis 20.000 kPa in Formen, die eine Temperatur von 60 bis 140°C aufweisen.

Die katalytische Entbinderung in Schritt 1a) und 3c) des erfindungsgemäßen Verfahrens erfolgt durch Säurebehandlung des Formteils vorzugsweise bei Temperaturen im Bereich von 80 bis 180°C über einen Zeitraum von bevorzugt 0,1 bis 24 Stunden, besonders bevorzugt 0,5 bis 12 Stunden. Die erforderliche Behandlungsdauer hängt von der Behandlungstemperatur, der Konzentration und des Typs der Säure in der Behandlungsatmosphäre wie auch von der Größe des Formkörpers und von der Korngröße des Pulvers A ab. Die Säurekonzentration beträgt unter den üblichen Bedingungen ca. 4 bis 5 Vol-% des Atmosphärengases, welches im Allgemeinen Stickstoff ist.

Geeignete Säuren für die säurekatalysierte Entbinderung in Schritt 1a) und 3c) des erfindungsgemäßen Verfahrens sind beispielsweise anorganische, bei Raumtemperatur bereits gasförmige, zumindest aber bei der Behandlungstemperatur verdampfbare Säuren. Beispiele sind Halogenwasserstoffsäuren und Salpetersäure. Geeignete organische Säuren sind Ameisensäure, Essigsäure, Oxalsäure oder Trifluoressigsäure. Weiterhin als Säure geeignet sind BF₃ oder dessen Addukte an organische Ether.

Wird für die vorgenannten Säuren ein übliches Trägergas (Inertgas z.B. Stickstoff) verwendet, so kann dieses vorher durch die Säure geleitet und mit dieser beladen werden. Das so beladene Trägergas wird dann auf die Behandlungstemperatur gebracht, die zweckmäßigerweise höher als die Beladungstemperatur ist, um eine Kondensation der Säure zu vermeiden. Die Säuren können auch im Ofenraum selbst verdampft und durch Verwirbelung der Ofenatmosphäre schnell im Ofenraum verteilt werden.

Bevorzugt wird die Säure über eine Dosiereinrichtung dem Entbinderungsofen zugeführt, in einer flachen Schale verdampft und durch eine Umwälzung der Ofenatmosphäre gleichmäßig verteilt.

Die Säurebehandlung in Schritt 1a) und 3c) des erfindungsgemäßen Verfahrens kann in handelsüblichen Anlagen ausgeführt werden, die nach den Grundlagen wie in EP-A 0 413 231 beschrieben funktionieren.

Die katalytische Entbinderung gemäß Schritt 1a) und 3c) des erfindungsgemäßen Verfahrens kann auch vorteilhaft, insbesondere bei Verwendung von Formmassen enthaltend reaktive und/oder oxidationsempfindliche sinterbare Pulver A, mit Säuren erfolgen, die bei Raumtemperatur fest sind und bei höheren Temperaturen sublimieren oder schmelzen und verdampfen, darunter insbesondere solche mit einem Sublimations- oder Schmelzpunkt zwischen 80 und 200°C. Bevorzugt sind Oxalsäure, vorzugsweise wasserfreie Oxalsäure, oder Oxalsäuredihydrat. Es wird besonders bevorzugt eine Lösung von wasserfreier Oxalsäure in Ameisensäure, Essigsäure oder deren Gemischen verwendet. Weiterhin eignen sich Glyoxalsäure und Malonsäure. Außerdem kommen Benzolsulfonsäure, Naphthalinsulfonsäuren und Maleinsäure oder deren Mischungen in Betracht. Die vorgenannten Säuren können sowohl für sich allein oder auch zusammen mit einem Trägergas wie Luft, Stickstoff oder einem Edelgas bei der Entbinderung eingesetzt werden.

Bei der zuletzt genannten Ausführungsform gelangen die verwendeten Säuren im Allgemeinen bei der Entbinderungstemperatur zunächst in die Gasphase, wirken von hier aus auf das verbliebene Bindemittel B₁) ein und desublimieren oder erstarren nach Abkühlung an den Wandungen der Entbinderungsvorrichtung. In einem anschließenden Entbinderungsvorgang gelangen sie wieder in die Gasphase, d.h. die Säure verlässt die Vorrichtung praktisch nicht.

Zur Erleichterung der Dosierung kann es zweckmäßig sein, die oben genannten Säuren, die bei Raumtemperatur fest sind und bei höheren Temperaturen sublimieren oder schmelzen und verdampfen, als Lösung in polaren Lösungsmitteln, vorzugsweise mit Siedepunkten unter 200°C, einzusetzen. Als solche kommen vor allem Aceton, Dioxan, Ethanol und Acetonitril in Betracht, insbesondere aber organische Säuren wie Ameisensäure und/oder Essigsäure.

Die Säurebehandlung in Schritt 1a) und 3c) des erfindungsgemäßen Verfahrens erfolgt bei der Variante mit Säuren, die bei Raumtemperatur fest sind und bei höheren Temperaturen sublimieren oder schmelzen und verdampfen, vorzugsweise bei Temperaturen im Bereich von 100 bis 160°C.

Bevorzugt wird die wasserfreie Oxalsäure als Lösung über eine Dosiereinrichtung dem Entbinderungsofen zugeführt, verdampft und durch eine Umwälzung der Ofenatmosphäre gleichmäßig verteilt.

Die katalytische Säurebehandlung in Schritt 1a) des erfindungsgemäßen Verfahrens wird vorzugsweise solange durchgeführt, bis die Binderkomponenten B₁) und B₂) in dem Formteil zu mindestens 90 Gew.-%, bevorzugt zu 95 Gew.-%, besonders bevorzugt zu 98 Gew.-% entfernt sind.
Die katalytische Entbinderung in Schritt 3c) des erfindungsgemäßen Verfahrens wird vorzugsweise solange durchgeführt, bis die Binderkomponente B₁) in dem Formteil zu mindestens 20 %, bevorzugt zu 50 %, besonders bevorzugt zu 85 %, ganz besonders bevorzugt zu 95 % oder mehr entfernt ist.

Es kann in Schritt 3 c) vorteilhaft sein, die Bindemittelkomponente B₁) nur teilweise katalytisch zu entfernen, da üblicherweise die entbinderten Bauteile noch für das Sintern in einen anderen Ofen umgelagert werden müssen und die Formteilfestigkeit dann unzureichend werden kann. In solchen Fällen kann die Entfernung von lediglich 20 bis 50 % der Bindemittelkomponente B₁) zielführender sein; der zurückbleibende, stabilisierende Rest kann dann im Sinterofen mit einem angepassten Zyklus thermisch entfernt werden.

Sollte dies nicht nötig sein, dann ist in Schritt 3 c) eine Entfernung von 85 Gew.-%, bevorzugt 95 Gew.-% oder mehr der Bindemittelkomponente B₁) anzustreben.

Bei der Extraktion der Bindemittelkomponenten B₂), B₃) und gegebenenfalls C) aus dem Formteil gemäß Schritt 2a) und 3a) des erfindungsgemäßen Verfahrens richtet sich die Wahl des Lösungsmittels nach der chemischen Natur der vorgenannten Komponenten. Auch Mischungen geeigneter Lösungsmittel können verwendet werden.

Die bevorzugten Bindemittelkomponenten B₂), B₃) und gegebenenfalls C) können beispielsweise in aprotischen organischen Lösungsmitteln gelöst werden wie Ether, Ester, Amide oder Ketone, z.B. Tetrahydrofuran, Diethylether, Butyrolacton, Dimethylformamid, Methylethylketon oder Aceton, aber auch in protischen organischen Lösungsmitteln wie C₁-C₆-Alkoholen z.B. Ethanol und Isopropanol; Poly-1,3-dioxolan kann darüber hinaus in Wasser gelöst werden.

Falls Wasser als Lösungsmittel verwendet werden kann, wird es besonders bevorzugt, da Wasser wegen der Nichtbrennbarkeit eine noch viel einfachere und zudem umweltverträglichere Handhabung ermöglicht.

Für reaktive und/oder oxidationsempfindliche Sinterpulver A wird bei Verwendung von Wasser als Lösungsmittel diesem vorzugsweise ein üblicher Korrosionsinhibitor, beispielsweise modifizierte Phosphonate wie Amino-tris(methylenphosphonsäure), Hydroxyethylamino-di(methylenphosphonsäure) oder Phosphonobutan-1,2,4-tricarbonsäure, erhältlich z.B. von der Fa. Zschimmer & Schwarz, hinzugefügt.

Äußerst reaktive Sinterpulver A werden vorzugsweise mit aprotischen organischen Lösungsmitteln, wie Tetrahydrofuran, Diethylether, Butyrolacton, Dimethylformamid, Methylethylketon oder vorzugsweise Aceton, behandelt.

Die Behandlung des Formteils mit einem Lösungsmittel gemäß Schritt 2a) und 3a) des erfindungsgemäßen Verfahrens kann in handelsüblichen Anlagen mit geschlossenem Lösungsmittelkreislauf für die Reinigung von bearbeiteten, mit Schmiermittel verunreinigten Werkstücken durchgeführt werden, beispielhaft beschrieben in DE-A 4337129. Vorzugsweise erfolgt Schritt 2a) und 3a) bei erhöhter Temperatur bis maximal 120°C um den Lösungsprozess zu beschleunigen, besonders bevorzugt erfolgen Schritt 2a) und 3a) bei Siedetemperatur des Lösungsmittels unter Rückfluss.

Die als Restbinder für Schritt 2a) und 3a) des erfindungsgemäßen Verfahrens eingesetzte Bindemittelkomponente B₁) - Polyoxymethylenhomo-und copolymere (POM) - sind bis 120°C gegen praktisch alle gängigen Lösungsmittel resistent und garantieren auch bei höheren Temperaturen bis 120 °C immer noch eine sehr hohe Festigkeit.

Es ist von Vorteil, wenn in Schritt 2a) und 3a) des erfindungsgemäßen Verfahrens bei der Extraktion ein großer Konzentrationsunterschied zwischen den löslichen Binderkomponenten B₂), B₃) und gegebenenfalls C) im Formteil und dem Lösungsmittel besteht. Letzteres kann man dadurch erreichen, dass man das beladene Lösungsmittel häufig durch frisches Lösungsmittel austauscht und/oder das gelöste Extrakt schnell beispielsweise durch eine Umwälzung von der Oberfläche des Extraktionsgutes weggeführt wird.

Es kann sich ergeben und auch erwünscht sein, dass die Bindemittelkomponenten B₂) und/oder B₃) und gegebenenfalls C) nur teilweise in dem gewählten Lösungsmittel löslich sind und bei der Lösungsmittelvorentbinderung gemäß Schritt 2a) und 3a) nur teilweise entfernbar sind. Eine teilweise Entfernung der vorgenannten Bindemittelkomponenten kann für die Festigkeit der Formteile im Hinblick auf die Handhabung bei der noch folgenden thermischen oder katalytischen Entbinderung von Vorteil sein.

Alternativ kann die für das Umsetzen in den Sinterofen erwünschte Restbinderfunktion auch dadurch gegeben sein, dass die Komponente B₁) bei der thermischen Entbinderung gemäß Schritt 2c) oder bei der katalytischen Entbinderung gemäß Schritt 3c) nur unvollständig entfernt wird.

Die Komponente C) kann ebenfalls in den gleichen Lösungsmitteln löslich sein wie die Komponente(n) B₂) und/oder B₃), was im Allgemeinen von Vorteil ist.

Die Behandlung mit einem Lösungsmittel gemäß Schritt 2a) und 3a) des erfindungsgemäßen Verfahrens wird vorzugsweise so lange durchgeführt, bis die Bindemittelkomponenten B₂), B₃) und C) zu mindestens 50 Gew.-%, vorzugsweise zu 70 Gew.-%, besonders bevorzugt zu 80 Gew.-%, aus dem Formteil entfernt sind. Dieser Zustand wird im Allgemeinen nach 4 bis 40 Stunden erreicht. Die erforderliche Behandlungsdauer hängt von der Behandlungstemperatur, von der Güte des Lösungsmittels für die Bindemittelkomponenten B₂), B₃) und C), vom Molekulargewicht der Bindemittelkomponenten B₂), B₃) und C), wie auch von der Größe des Formkörpers ab.

Nach der Extraktion gemäß Schritt 2a) und 3a) müssen die Grünteile, welche nun porös und mit Lösungsmittel gesättigt sind, noch getrocknet werden. Die Trocknung des Formteils geschieht vorzugsweise auf herkömmliche Weise, beispielsweise mit Hilfe eines Vakuumtrockenofens, eines Wärmeschranks oder eines Umwälzofens, gemäß Schritt 2b) und 3b) des erfindungsgemäßen Verfahrens.

Die Trocknung kann aber auch vorteilhaft in Schritt 2c) und 3c) des erfindungsgemäßen Verfahrens integriert sein. In diesem Fall kann sowohl die Trocknung als auch die thermische bzw. katalytische Entbinderung gemäß Schritt 2c) und 3c) der Komponente B₁) in der gleichen Anlage, beispielsweise in einem Umwälzofen, ausgeführt werden, wodurch ein Umladen der Braunteile nicht erforderlich ist.

Vorzugsweise wird das Lösungsmittel in einem separaten Schritt 2b) und 3b) entfernt. Dabei orientiert sich die Trocknungstemperatur nach der Siedetemperatur des Lösungsmittels, wird aber vorzugsweise etwas niedriger gewählt, um das Risiko eines schlagartigen oder zu schnellen Trocknungsvorgangs mit möglichen negativen Folgen für die Qualität des Grünteils zu vermeiden. Üblicherweise ist die Trocknung gemäß Schritt 2b) und 3b) des erfindungsgemäßen Verfahrens in 0,5 bis 8 h abgeschlossen.

Die oxidative thermische Entbinderung 2c) der Komponente B₁) gemäß dem erfindungsgemäßen Verfahren findet in Ofenanlagen statt, in denen die Formteile in einer sauerstoffhaltigen Atmosphäre für einen definierten Zeitraum einer geeigneten Temperatur im Bereich von 140 bis 200°C ausgesetzt werden. Die Konstruktion und die Materialien des Ofens müssen gewährleisten, dass die Temperatur in dem Ofenvolumen überall gleich ist, und eine gute Wärmeübertragung auf die zu entbindernden Formteile erreicht wird. Insbesondere sind kalte Stellen im Inneren der Ofenanlage zu vermeiden, um das Auskondensieren von Zersetzungsprodukten zu verhindern. Unter einer sauerstoffhaltigen Atmosphäre ist ein Gasgemisch aus einem Inertgas wie Stickstoff oder Argon mit 1 bis 100 Vol-% Sauerstoff zu verstehen, wobei Luft bevorzugt ist. Bei Batch-Öfen sind aus dem Stand der Technik Einbauten bzw. Umwälzelemente bekannt, die für eine gleichmäßige Verteilung und Verwirbelung der Ofenatmosphäre sorgen, so dass sämtliche Formkörper möglichst gleichen Temperaturbedingungen unterliegen.

Ein bevorzugter Ofen ist ein üblicher Umwälzofen für Wärmebehandlungen. Insbesondere bei höherer Beladung des Ofens ist neben der Gasverwirbelung eine ausreichende Frischgasversorgung notwendig (mindestens ein zehnfacher Austausch), um das Zersetzungsprodukt Formaldehyd ausreichend zu verdünnen (< 4 Vol-%) und damit den Ofen in einem sicheren Betriebszustand zu halten, da z.B. Luft/Formaldehyd-Gemische zündfähig sind.

Die oxidative thermische Restentbinderung gemäß Schritt 2c) des erfindungsgemäßen Verfahrens wird vorzugsweise so lange durchgeführt, bis die Bindemittelkomponente B₁) mindestens zu 20 Gew.-%, vorzugsweise zu 50 Gew.-%, besonders bevorzugt zu 85 Gew.-%, aus dem Formteil entfernt ist.

Es kann wünschenswert sein nicht die ganze vorhandene Menge an Polyacetal thermisch zu entfernen, da üblicherweise die entbinderten Bauteile noch für das Sintern in einen anderen Ofen umgelagert werden müssen und die Formteilfestigkeit dann unzureichend werden kann. In solchen Fällen kann die Entfernung von lediglich 20 bis 50 Gew.-% der Maximalmenge der Bindemittelkomponente B₁) zielführender sein; der zurückbleibende, stabilisierende Rest kann dann im Sinterofen mit einem angepassten Zyklus thermisch entfernt werden.

Die nach Schritt 1a) noch vorhandene Restbindermenge der Komponente B₃) kann in Schritt 1b), üblicherweise integriert in den Sinterzyklus, durch langsames Aufheizen ausgetrieben werden. Das Gleiche gilt auch in den Schritten 2d) und 3d) für gegebenenfalls noch vorhandene Restmengen der Komponenten B₁), B₂), B₃), und/oder C).

Die thermische Restentbinderung oder Pyrolyse gemäß denn Schritten 1b), 2d) und 3d) kann, üblicherweise im Sinterofen, unter reduziertem Druck stattfinden oder auch in einem Trägergas zum Herausführen der Zersetzungsprodukte. Üblicherweise wird für Metallpulver als Trägergas ein inertes Gas wie Stickstoff oder Argon gewählt, oder auch ein reduzierendes Gas wie z.B. Wasserstoff. Für Keramikpulver wird als Trägergas üblicherweise Luft, oder, insbesondere bei Nichtoxidkeramik, ein Inertgas ausgewählt oder die thermische Restentbinderung wird im Vakuum ausgeführt.

Der Zersetzungsbereich des Restbinders ist abhängig vom Polymeren und von der gewählten Atmosphäre, befindet sich aber üblicherweise im Temperaturbereich 200 bis 600°C. In diesem Temperaturbereich empfiehlt sich eine reduzierte Aufheizgeschwindigkeit von 5 °C/min, bevorzugt 3°C/min, besonders bevorzugt 2°C/min. Bei der Temperatur der maximalen Zersetzungsgeschwindigkeit des Polymeren kann eine Haltestufe mit einer Länge von 0,25 bis 4 h, bevorzugt 0,5 bis 1 h eingeführt werden. Dafür kann dann in den angrenzenden Temperaturbereichen unter- und oberhalb dieser charakteristischen Temperatur eine höhere Aufheizgeschwindigkeit, z.B. 3 bis 5 °C/min, gewählt werden.

Das so nach dem erfindungsgemäßen Verfahren vom Bindemittel befreite Produkt kann in üblicher Weise durch Sintern bei Temperaturen oberhalb 600°C bis 2000°C in einen metallischen oder keramischen Formkörper überführt werden. Das Sintern kann gegebenenfalls mit einer beschleunigten Aufheizrate von 5 bis 10 °C/min im Temperaturbereich von 200 bis 600°C erfolgen, sofern es keinen Restbinder mehr gibt.

Die erfindungsgemäßen Formmassen sind universell einsetzbar und eignen sich für verschiedenartige Verfahren zur Herstellung von Formkörpern. Die erfindungsgemäßen Formkörper können als Bauteile verwendet werden.

Die Erfindung wird nachstehend anhand von Beispielen näher erläutert:
In den nachfolgenden Beispielen wurden Versuchsmassen in einem Konusmischer homogenisiert und in einem auf 190 °C beheizten Laborextruder homogenisiert und granuliert.

Die Versuchsmasse mit Keramikpulver gemäß Beispiel 9 wurde in einem auf 180 °C beheizten Sigmakneter mit einer Knetzeit von 2 h hergestellt.

### Beispiel 1

Die Formmasse 1 wies die folgende Zusammensetzung auf:
- 56,75 Vol-% einer Mischung aus 98 Gew.-% Carbonyleisenpulver und 2 Gew.-% Carbonylnickelpulver (FN2)
- 43,25 Vol-% Binder, enthaltend
   + 62 Gew.-% Polyoxymethylen mit 2 mol-% 1,3-Dioxepan
   + 29 Gew.-% Polydioxolan (PDL) mit einer Molmasse 28.000,
   + 9 Gew.-% Polylactid (PLA) mit einer Molmasse 120.000

In der Formmasse 1 ist damit der Gewichtsanteil der Binderkomponenten B1, B2, und B3 wie folgt:
B1 7,26 Gew.-%
B2 3,39 Gew.-%
B3 1,11 Gew.-%

### Beispiel 2

Die Formmasse 2 wies die folgende Zusammensetzung auf:
- 56,75 Vol-% einer Mischung aus 98 Gew.-% Carbonyleisenpulver und 2 Gew.-% Carbonylnickelpulver (FN2)
- 43,25 Vol-% Binder, enthaltend
   + 48 Gew.-% Polyoxymethylen mit 2 mol-% 1,3-Dioxepan
   + 43 Gew.-% Polydioxolan (PDL) mit einer Molmasse 28.000,
   + 9 Gew.-% Polylactid (PLA) mit einer Molmasse 120.000

In der Formmasse 2 ist damit der Gewichtsanteil der Binderkomponenten B1, B2, und B3 wie folgt:
B₁ 5,62 Gew.-%
B2 5,05 Gew.-%
B3 1,08 Gew.-%

### Beispiel 3

Die Formmasse 3 wies die folgende Zusammensetzung auf:
- 56,75 Vol-% einer Mischung aus 98 Gew.-% Carbonyleisenpulver und 2 Gew.-% Carbonylnickelpulver (FN2)
- 43,25 Vol-% Binder, enthaltend
   + 86 Gew.-% Polyoxymethylen mit 2 mol-% 1,3-Dioxepan
   + 3 Gew.-% Polytetrahydofuran (PTHF) mit der Molmasse 2000,
   + 11 Gew.-% Polybutylensuccinat (PBS) mit einem Molgewicht von 109.000

In der Formmasse 3 ist damit der Gewichtsanteil der Binderkomponenten B1, B2, und B3 wie folgt:
B1 10,17 Gew.-%
B2 0,36 Gew.-%
B3 1,32 Gew.-%

### Beispiel 4

Die Formmasse 4 wies die folgende Zusammensetzung auf:
- 56,75 Vol-% einer Mischung aus 98 Gew.-% Carbonyleisenpulver und 2 Gew.-% Carbonylnickelpulver (FN2)
- 43,25 Vol-% Binder, enthaltend
   + 67 Gew.-% Polyoxymethylen mit 2 mol-% 1,3-Dioxepan
   + 24 Gew.-% Polydioxolan (PDL) mit einer Molmasse 12.500,
   + 9 Gew.-% Polybutylensuccinat (PBS) mit einem Molgewicht von 109.000

In der Formmasse 4 ist damit der Gewichtsanteil der Binderkomponenten B1, B2, und B3 wie folgt:
B1 7,90 Gew.-%
B2 2,81 Gew.-%
B3 1,13 Gew.-%

### Beispiel 5

Die Formmasse 5 wies die folgende Zusammensetzung auf:
- 56,75 Vol-% einer Mischung aus 98 Gew.-% Carbonyleisenpulver und 2 Gew.-% Carbonylnickelpulver (FN2)
- 43,25 Vol-% Binder, enthaltend
   + 68 Gew.-% Polyoxymethylen mit 2 mol-% 1,3-Dioxepan
   + 24 Gew.-% Polydioxolan (PDL) mit einer Molmasse 28.000,
   + 8 Gew.-% Polycaprolacton (PCL) mit einer Molmasse 23.600

In der Formmasse 5 ist damit der Gewichtsanteil der Binderkomponenten B1, B2, und B3 wie folgt:
B1 7,91 Gew.-%
B2 2,81 Gew.-%
B3 0,99 Gew.-%

### Beispiel 6

Die Formmasse 6 wies die folgende Zusammensetzung auf:
- 56,75 Vol-% einer Mischung aus 98 Gew.-% Carbonyleisenpulver und 2 Gew.-% Carbonylnickelpulver (FN2)
- 43,25 Vol-% Binder, enthaltend
   + 79 Gew.-% Polyoxymethylen mit 2 mol-% 1,3-Dioxepan
   + 16 Gew.-% Polydioxepan (PDP) mit einer Molmasse 33.000,
   + 5 Gew.-% Poly-3-hydroxybutyrat-co-3-hydroxyvalerat, (PHBV) mit einer Molmasse 840.000

In der Formmasse 6 ist damit der Gewichtsanteil der Binderkomponenten B1, B2, und B3 wie folgt:
B1 9,08 Gew.-%
B2 1,90 Gew.-%
B3 0,55 Gew.-%

### Beispiel 7

Die Formmasse 7 wies die folgende Zusammensetzung auf:
- 56,75 Vol-% einer Mischung aus 98 Gew.-% Carbonyleisenpulver und 2 Gew.-% Carbonylnickelpulver (FN2)
- 43,25 Vol-% Binder, enthaltend
   + 69 Gew.-% Polyoxymethylen mit 2 mol-% 1,3-Dioxepan
   + 29 Gew.-% Polydioxolan (PDL) mit einer Molmasse 28.000,
   + 2,4 Gew.-% Polypropylencarbonat (PPC) mit einer Molmasse 89.000

In der Formmasse 7 ist damit der Gewichtsanteil der Binderkomponenten B1, B2, und B3 wie folgt:
B1 8,14 Gew.-%
B2 3,41 Gew.-%
B3 0,29 Gew.-%

### Beispiel 8

Die Formmasse 8 wies die folgende Zusammensetzung auf:
- 64 Vol-% eines Metallpulvers der Zusammensetzung 316L (DIN 1.4404) mit einer mittleren Korngröße von 10 µm
- 36 Vol-% Binder, enthaltend
   + 62 Gew.-% Polyoxymethylen mit 2 mol-% 1,3-Dioxepan
   + 29 Gew.-% Polydioxolan (PDL) mit einer Molmasse 28.000,
   + 9 Gew.-% Polylactid (PLA) mit einer Molmasse 120.000

In der Formmasse 8 ist damit der Gewichtsanteil der Binderkomponenten B1, B2, und B3 wie folgt:
B1 5,31 Gew.-%
B2 2,43 Gew.-%
B3 0,80 Gew.-%

### Beispiel 9

Die Formmasse 9 wies die folgende Zusammensetzung auf:
- 47 Vol-% eines Keramikpulvers der Zusammensetzung ZrO₂ - 5 Gew.-% Y₂O₃ (TZP) mit einer mittleren Korngröße von 0,3 µm
- 51 Vol-% Binder, enthaltend
   + 79 Gew.-% Polyoxymethylen mit 2 mol-% 1,3-Dioxepan
   + 19 Gew.-% Polydioxepan (PDP) mit einer Molmasse 12.500,
   + 2 Gew.-% Polybutylensuccinat (PBS) mit einer Molmasse 109.000
   - 2 Vol-% Dispergator C, ein ethoxylierter Fettalkohol mit der Molmasse 600

In der Formmasse 9 ist damit der Gewichtsanteil der Binderkomponenten B1, B2, und B3 wie folgt:
B₁ 13,56 Gew.-%
B2 3,30 Gew.-%
B3 0,41 Gew.-%

### C 1,70 Gew.-%

### Spritzgießversuche an realen Bauteilen

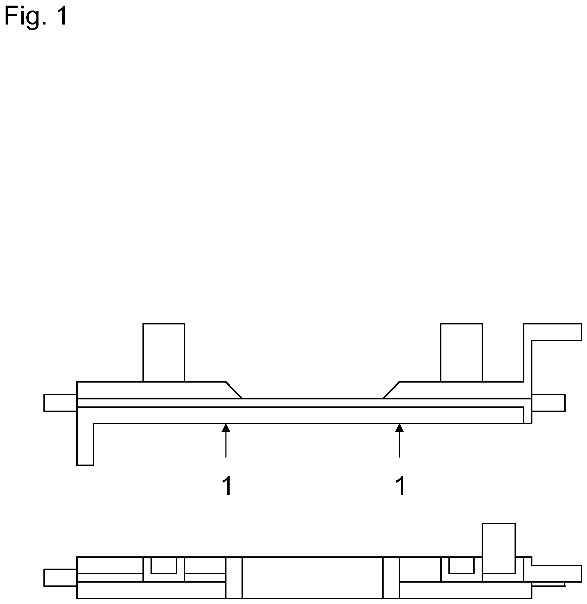

Die Untersuchung der generellen Eignung der Versuchsmassen wurde mit einem komplexen und schweren Bauteil ausgeführt, ein mit zwei Bandangüssen an den Positionen 1 angespritztes Scharnier komplexer Geometrie (Figur 1: oben Ansicht, unten Aufsicht des Bauteils).

Die Länge des Bauteils betrug 100 mm, das Gewicht des erhaltenen Sinterteils war für die Beispiele 1 bis 7 ca. 34 g, für Beispiel 8 ca. 40 g und für Beispiel 9 ca. 26 g.

Damit ist sichergestellt, dass die Ergebnisse der Versuche auch praxisrelevant sind, denn das Eigengewicht dieses Bauteils stellt überdurchschnittlich hohe Forderungen an die Festigkeit nach der Entbinderung.

### Untersuchung der Verarbeitung auf der Spritzgießmaschine

Die Versuchsmassen wurden im Zylinder der Spritzgießmaschine bei 190 °C aufgeschmolzen, die Spritzgießform war auf 135°C temperiert. Generell war der benötigte Einspritzdruck ca. 1500 - 1800 bar, ein für POM-basierte Spritzgießmassen normaler Wert.

Die Versuchsmassen unterschieden sich in der benötigten Kühlzeit vor der Entformung. Die Versuchsmassen mit einem höheren Anteil an der Komponente B₂) (30 % und höher) waren etwas weicher und benötigten eine längere Kühlzeit, um das Grünteil intakt entformen zu können; die Grünteile zeigten auch etwas stärker Schlieren auf der Oberfläche.

Bei allen Versuchsmassen war die Verarbeitung auf übliche Weise möglich. Lediglich die Versuchsmasse 2 mit einem hohen PDL-Gehalt. konnte nur mit einem Druck von 600 bar verarbeitet werden. Zusätzlich musste die Massetemperatur und die Formtemperatur ca. 10 °C abgesenkt werden.

### Untersuchung des Entbinderns und des Sinterns

### Variante 1 - Katalytische und thermische Entbinderung

Die primäre katalytische Säureentbinderung wurde mit den Bauteilen der Beispiele 1 bis 9 in einem 50-L-Laborofen bei 110°C ausgeführt. Es wurde zum Inertisieren mit 500 L/h Stickstoff gespült, nach 1 h wurden in den weiterhin mit 500 L/h Stickstoff gespülten Ofen 30 ml/h HNO₃ hineindosiert und verdampft.

So wurden die Grünteile aus den Beispielen 1 bis 9 einer katalytischen Entbinderung unterzogen. Nach 6 h Entbinderzeit war von allen Bauteilen der Anteil an katalytisch zersetzbaren Binderanteilen (B₁ + B₂) zu mindestens 90 % entfernt (Tabelle 1).

**Tabelle 1 Effekt der säurekatalytischen Entbinderung**

| Beispiel | Verlust Gew.-% katalytisch | Verlust in % (B₁ + B₂) |
|---|---|---|
| 1) FN2 - 29 PDL - 9 PLA | 10,38 | 97,6 |
| 2) FN2 - 43 PDL - 9 PLA | 10,38 | 97,3 |
| 3) FN2 - 3PTHF - 11 PBS | 9,58 | 94,2 |
| 4) FN2 - 24 PDL - 9 PBS | 9,78 | 91,3 |
| 5) FN2 - 24 PDL - 8 PCL | 9,95 | 92,8 |
| 6) FN2 - 16 PDP - 5 PHBV | 10,45 | 95,2 |
| 7) FN2 - 29 PDL - 2,4 PPC | 11,46 | 99,2 |
| 8) 316L - 29 PDL - 9 PLA | 7,71 | 99,6 |
| 9) TZP - 19 PDP - 2 PBS | 16,44 | 97,5 |

Die nach der Entbinderung erhaltenen Pulverformteile der Beispiele 1 bis 7 wurden in einem 30-L-Sinterofen mit Molybdänverkleidung und Molybdänsinterelementen unter Stickstoff zunächst bei Temperaturen von RT bis 600°C thermisch entbindert und dann bei höheren Temperaturen bis 1280°C unter Stickstoff der Qualität 4.8 gesintert.

Die Sinterkurve war wie folgt:
- Raumtemperatur bis 600°C mit 5°C / Min
- Haltezeit bei 600°C: 1 h
- 600 °C bis 1280°C mit 5°C / Min.
- Haltezeit bei 1280°C: 1 h
- Abkühlen mit 5°C / Min bis 1000°C
- Ofen aus, natürliche Abkühlung.

Mit diesem Sinterprogramm war es für fast alle Formmassen gemäß den Beispielen 1 bis 7 möglich, intakte Sinterteile mit einer guten Sinterdichte von zumindest 7,59 g/cm³ zu erreichen (siehe Tabelle x).

Lediglich die Formmasse gemäß Beispiel 4 erreichte unter diesen Bedingungen nur eine Sinterdichte von 7,42 g/cm³. Eine gute Dichte von 7,61 g/cm³ konnte mit dieser Formmasse mit einer reduzierten Aufheizgeschwindigkeit von 3°C / min im Bereich RT bis 600°C erreicht werden; dieser Befund begründet die bevorzugte Untergrenze von 90 % für die katalytische Entbinderung von POM nach Variante 1, denn die niedrigere Aufheizgeschwindigkeit beeinflusst die Kapazität des Sinterofens und damit die Wirtschaftlichkeit des Verfahrens negativ.

Das nach dem erfindungsgemäßen Verfahren erhaltene Formteil gemäß Beispiel 8 wurde in dem gleichen Sinterofen unter Wasserstoff der Qualität 4.8 gesintert. Die Sinterkurve war wie folgt:
- Raumtemperatur bis 600°C mit 5°C / Min
- Haltezeit bei 600°C: 1 h
- 600°C bis 1380°C mit 5°C / Min
- Haltezeit bei 1380°C: 1 h
- Abkühlen mit 5°C / Min bis 1000°C
- Ofen aus, natürliche Abkühlung.

Auch hier war es möglich intakte Sinterteile zu erhalten. Die Sinterteile erreichten eine gute Sinterdichte von 7,89 g/cm³.

Das nach der katalytischen Entbinderung erhaltene Pulverformteil des Beispiels 9 wurde in einem handelsüblichen Keramiksinterofen mit folgendem Programm in Luft gesintert.
- Raumtemperatur bis 270°C mit 3°C / Min
- Haltezeit bei 270°C: 1 h
- 270°C bis 1500°C mit 3°C / Min
- Haltezeit bei 1500°C: 1 h
- Abkühlen mit 5°C / Min bis 1000°C
- Ofen aus, natürliche Abkühlung

Die erhaltenen Sinterteile waren intakt, fehlerfrei und wiesen eine gute Sinterdichte von 6,05 g/cm³ auf.

**Tabelle 2 Sinterdichte der thermisch entbinderten und gesinterten Formteile**

| Beispiel | Sinterdichte g/cm³ |
|---|---|
| 1) FN2 - 29 PDL - 9 PLA | 7,63 |
| 2) FN2 - 43 PDL - 9 PLA | 7,62 |
| 3) FN2 - 3 PTHF - 11 PBS | 7,59 |
| 4) FN2 - 24 PDL - 9 PBS | 7,42 (7,61) |
| 5) FN2 - 24 PDL - 8 PCL | 7,59 |
| 6) FN2 - 16 PDP - 5 PHBV | 7,60 |
| 7) FN2 - 29 PDL - 2,4 PPC | 7,63 |
| 8) 316L - 29 PDL - 9 PLA | 7,89 |
| 9) TZP - 19 PDP - 2 PBS | 6,05 |

### Variante 2 - Lösungsmittelentbinderung + thermische Entbinderung

Die aus den Versuchsmassen hergestellten Grünteile wurden in einem Lösungsmittel vorbehandelt, danach wurde das Formteil getrocknet, thermisch restentbindert und gesintert.

Für die Lösungsmittelentbinderung wurden die Grünteile in einem gerührten Dreihalskolben im siedenden Lösungsmittel (Aceton, Ethanol, Wasser und Chloroform wurden eingesetzt) unter Rückfluss für 24 h behandelt. Lediglich Beispiel 8 musste für die Entbinderung in Wasser 48 h behandelt werden.
Der Gewichtsverlust wurde nach 4 h Trocknung in einem Umluftofen bei der Siedetemperatur des Lösungsmittels bestimmt.

**Tabelle 3 Effekt der Lösungsmittelentbinderung**

| Beispiel | Lösungsmittel | Verlust Gew.-% (24 h) | Verlust in % (B₂ + B₃) |
|---|---|---|---|
| 1) FN2 - 29 PDL - 9 PLA | Aceton | 3,67 | 81,5 |
| | Ethanol | 3,43 | 76,2 |
| 2) FN2 - 43 PDL - 9 PLA | Aceton | 5,25 | 85,6 |
| 3) FN2 - 3 PTHF - 11 PBS | Chloroform | 1,32 | 78,6 |
| 4) FN2 - 24 PDL - 9 PBS | Aceton | 2,36 | 59,9 |
| 5) FN2 - 24 PDL - 8 PCL | Aceton | 3,47 | 91,3 |
| 6) FN2 - 16 PDP - 5 PHBV | Aceton | 1,60 | 65,3 |
| 7) FN2 - 29 PDL - 2,4 PPC | Aceton | 3,27 | 88,4 |
| 8) 316L - 29 PDL - 9 PLA | Aceton | 2,67 | 82,7 |
| | Wasser 48 h | 2,33 | 72,1 |
| 9) TZP - 19 PDP - 2 PBS | Aceton | 4,30 | 79,5 * |

| | | | |
|---|---|---|---|
| * in % von (B₂ + B₃ + C) | | | |

Die Grünteile aus Beispiel 1 und 8 zeigen, dass die Wahl des Lösungsmittels (Aceton, Ethanol oder Wasser) mit darüber entscheidet, ob und wie viel der Bindemittelkomponente B₃) gelöst wird.

Beispiel 8 zeigt eine Lösungsmittelentbinderung von Poly-1,3-Dioxolan als Komponente B₂) mit Wasser. Die Entbinderung ist zwar nur halb so schnell, funktioniert aber ansonsten einwandfrei.

Anschließend wurden die Formteile thermisch in Luft nachentbindert. Die thermische Entbinderung wurde in einem gasdicht geschlossenen, mit 500 L/h Luft gespülten 50-L-Ofen mit Luftumwälzung ausgeführt. Die Formteile wurden 12 h in dem auf 165°C aufgeheizten Ofen behandelt. Danach wurden die Formteile entnommen und der Gewichtsverlust wurde bestimmt (Tabelle 4).

**Tab. 4 Effekt der thermischen Entbinderung**

| Beispiel | Lösungsmittel | Verlust Gew.-% thermisch |
|---|---|---|
| 1) FN2 - 29 PDL - 9 PLA | Aceton | 7,50 |
| | Ethanol | 7,42 |
| 2) FN2 - 43 PDL - 9 PLA | Aceton | 5,96 |
| 3) FN2 - 3 PTHF - 11 PBS | Chloroform | 10,04 |
| 4) FN2 - 24 PDL - 9 PBS | Aceton | 3,04 ** (9,17) |
| 5) FN2 - 24 PDL - 8 PCL | Aceton | 7,79 |
| 6) FN2 - 16 PDP - 5 PHBV | Aceton | 2,97 ** (9,02) |
| 7) FN2 - 29 PDL - 2,4 PPC | Aceton | 8,18 |
| 8) 316L - 29 PDL - 9 PLA | Aceton | 5,45 |
| | Wasser 48 h | 5,35 |
| 9) TZP - 19 PDP - 2 PBS | Aceton | 12,14 |

| | | |
|---|---|---|
| ** Risse im Formteil | | |

Der ermittelte Gewichtsverlust liegt bei den meisten Beispielen nah an oder etwas über dem Gehalt an Bindemittelkomponente B₁) und belegt die Effektivität des erfindungsgemäßen Verfahrens. Der zusätzliche Gewichtsverlust findet seinen Ursprung in dem in der vorangehenden Lösemittelentbinderung nicht gelösten Rest von Bindemittelkomponente B₂), welche dann bei der thermischen Entbinderung abgebaut wird.

Die Bauteile von Beispiel 4 und 6 zeigten Risse bzw. Delaminierungen; der Gewichtsverlust bleibt deutlich unter den aus dem Gehalt an Komponente B₁) zu erwartenden Wert. Hier war der Verlust an Bindemittelkomponenten B₂) und B₃) in Schritt 2a) geringer als die bevorzugten 70 %.
Mit einem deutlich langsameren Stufenprogramm waren diese Formteile jedoch intakt thermisch zu entbindern. Dazu wurde folgendes Programm verwendet:

| **Stufe** | **T₁** | **T₂** | **Heizrate** | **Verweilzeit bei T₂** |
|---|---|---|---|---|
| | [°C] | [°C] | [°C/h] | [h] |
| 0 | RT | 130 | 300 | 1 |
| 1 | 130 | 140 | 10 | 6 |
| 2 | 140 | 150 | 10 | 16 |
| 3 | 150 | 160 | 10 | 1 |
| 4 | 160 | 170 | 10 | 1 |
| 5 | 170 | 170 | - | 5 |

Mit diesem Heizprogramm war es möglich, intakt entbinderte Formteile zu erhalten; der Gewichtsverlust wird in Tabelle 3 in Klammern berichtet. Es ist also möglich mit zumindest 50 % Gewichtsverlust an Bindemittelkomponenten B₂) und B₃) in Schritt 2a) zu arbeiten.

Das langsamere Programm verringert jedoch die Wirtschaftlichkeit und muss in der Praxis oft, abhängig von Geometrie und Wandstärke des Formteils, feinjustiert und angepasst werden und ist daher aufwendiger.

Die nach dem zweistufigen Entbinderverfahren der Variante 2 behandelten Formteile wurden gesintert wie bei Variante 1 beschrieben. Die Sinterteile, auch die aus den Beispielen 4 und 6 mit dem langsameren Heizprogramm, waren intakt und fehlerfrei (Tabelle 5).

**Tabelle 5 Sinterdichten der gesinterten Formteile**

| Beispiel | Lösungsmittel | Sinterdichte g/cm³ |
|---|---|---|
| 1) FN2 - 29 PDL - 9 PLA | Aceton | 7,63 |
| | Ethanol | 7,61 |
| 2) FN2 - 43 PDL - 9 PLA | Aceton | 7,62 |
| 3) FN2 - 3 PTHF - 11 PBS | Chloroform | 7,63 |
| 4) FN2 - 24 PDL - 9 PBS | Aceton | (7,60) |
| 5) FN2 - 24 PDL - 8 PCL | Aceton | 7,59 |
| 6) FN2 - 16 PDP - 5 PHBV | Aceton | (7,59) |
| 7) FN2 - 29 PDL - 2,4 PPC | Aceton | 7,61 |
| 8) 316L - 29 PDL - 9 PLA | Aceton | 7,94 |
| | Wasser 48 h | 7,93 |
| 9) TZP - 19 PDP - 2 PBS | Aceton | 6,06 |

### Variante 3 - Lösungsmittelentbinderung + katalytische Entbinderung

Die Lösungsmittelentbinderung erfolgte mit den Formmassen der Beispiele 1 bis 9 in den gleichen Lösungsmitteln wie in Variante 2.

Anschließend wurden die Formteile bei 60°C getrocknet. Die Trocknung und die katalytische Entbinderung wurde in einem gasdicht geschlossenen, mit 500 L/h Stickstoff gespülten 50-L-Ofen mit Umwälzung ausgeführt. Die katalytische Entbinderung wurde wie in Variante 1 ausgeführt. Im Anschluss wurden die im Lösungsmittel vorentbinderten Formteile in einem Umluftofen bei der Siedetemperatur des Lösungsmittels getrocknet und einer katalytischen Entbinderung wie bei Variante 1 beschrieben unterzogen. Der Gewichtsverlust wurde, in Bezug auf das Gewicht des unbehandelten Formteils, ermittelt (Tabelle 6).

**Tabelle 6 Effekt der Lösungsmittel- und katalytischen Entbinderung**

| Beispiel | Lösungsmittel | Verlust Gew.-% (24 h) | Verlust Gew.-% katalytisch |
|---|---|---|---|
| 1) FN2 - 29 PDL - 9 PLA | Aceton | 3,67 | 7,58 |
| | Ethanol | 3,43 | 7,56 |
| 2) FN2 - 43 PDL - 9 PLA | Aceton | 5,25 | 6,02 |
| 3) FN2 - 3 PTHF - 11 PBS | Chloroform | 1,32 | 10,11 |
| 4) FN2 - 24 PDL - 9 PBS | Aceton | 2,36 | 7,56 |
| 5) FN2 - 24 PDL - 8 PCL | Aceton | 3,47 | 7,87 |
| 6) FN2 - 16 PDP - 5 PHBV | Aceton | 1,78 | 9,06 |
| 7) FN2 - 29 PDL - 2,4 PPC | Aceton | 3,27 | 8,29 |
| 8) 316L - 29 PDL - 9 PLA | Aceton | 2,67 | 5,47 |
| | Wasser 48 h | 2,33 | 5,42 |
| 9) TZP - 19 PDP - 2 PBS | Aceton | 4,30 | 13,14 |

Der ermittelte Gewichtsverlust nach der katalytischen Entbinderung liegt bei allen Beispielen wieder meist knapp unter oder etwas über dem Gehalt an Bindemittelkomponente B₁) und belegt die Effektivität dieser Variante des erfindungsgemäßen Verfahrens.

Der zusätzliche Gewichtsverlust findet auch hier seinen Ursprung in dem in der vorangehenden Lösemittelentbinderung nicht gelösten Rest von Bindemittelkomponente B₂), welche bei der katalytischen Entbinderung auch abgebaut wird.

Alle nach dem zweistufigen Entbinderverfahren der Variante 3 erhaltenen Formteile wurden gesintert wie bei Variante 1 beschrieben. Die Sinterteile waren intakt und fehlerfrei (Tabelle 7).

**Tabelle 7 Sinterdichten der nach Variante 3 behandelten Formteile**

| Beispiel | Lösungsmittel | Sinterdichte g/cm³ |
|---|---|---|
| 1) FN2 - 29 PDL - 9 PLA | Aceton | 7,62 |
| | Ethanol | 7,62 |
| 2) FN2 - 43 PDL - 9 PLA | Aceton | 7,62 |
| 3) FN2 - 3 PTHF - 11 PBS | Chloroform | 7,62 |
| 4) FN2 - 24 PDL - 9 PBS | Aceton | 7,61 |
| 5) FN2 - 24 PDL - 8 PCL | Aceton | 7,60 |
| 6) FN2 - 16 PDP - 5 PHBV | Aceton | 7,60 |
| 7) FN2 - 29 PDL - 2,4 PPC | Aceton | 7,62 |
| 8) 316L - 29 PDL - 9 PLA | Aceton | 7,91 |
| | Wasser 48 h | 7,90 |
| 9) TZP - 19 PDP - 2 PBS | Aceton | 6,06 |

## Patentansprüche

1. Bindemittel B zur Herstellung keramischer oder metallischer Formkörper enthaltend
B₁) 40 bis 95 Gew.-% mindestens eines Polyoxymethylenhomo- oder -copolymerisats,
B₂) 2 bis 60 Gew.-% mindestens eines Polyethers ausgewählt aus Poly-1,3-dioxolan, Poly-1,3-dioxan, Poly-1,3-dioxepan, Polytetrahydrofuran, Poly-p-dioxanon und deren Copolymeren,
B₃) 2 bis 15 Gew.-% mindestens eines aliphatischen Polyesters ausgewählt aus:
Polyhydroxyalkanoaten enthaltend Struktureinheiten der Formel (I) 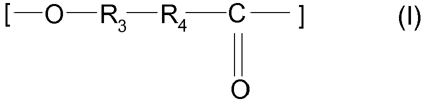 wobei R₃ die Gruppierung -(CH)y(CH₂)ₓCH₃, worin x eine ganze Zahl von 0 bis 2 und y eine ganze Zahl von 0 bis 1 ist, und R₄ die Gruppierung (- CH₂ -)_{z}, worin z eine ganze Zahl von 1 bis 5 ist, bedeutet;
Polykondensaten enthaltend Struktureinheiten der Formel (II) 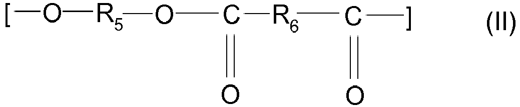 wobei R₅ die Gruppierung (-CH₂-)ₘ, worin m eine ganze Zahl von 2 bis 4 ist, und R₆ die Gruppierung (-CH₂-)_{n,} worin m eine ganze Zahl von 2 bis 4 ist, bedeutet;
Polyalkylencarbonaten enthaltend Struktureinheiten der allgemeinen Formel (III) 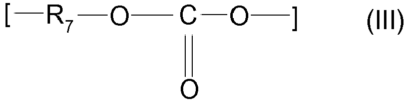 wobei R₇ ein (C₁ - C₆)-Alkylenrest ist;
sowie deren Stereoisomeren und Copolymeren,
wobei die Summe der Komponenten B₁), B₂) und B₃) 100 Gew.-% ergibt.

2. Bindemittel B gemäß Anspruch 1, enthaltend
B₁) 50 bis 90 Gew.-% mindestens eines Polyoxymethylenhomo- oder -copolymerisats;
B₂) 5 bis 50 Gew-% mindestens eines Polyethers ausgewählt aus Poly-1,3-dioxolan, Poly-1,3-dioxepan und Polytetrahydrofuran und deren Copolymeren,
B₃) 3 bis 12 Gew.-% mindestens eines aliphatischen Polyesters ausgewählt aus:
Poly-(C₂-C₄)-alkylencarbonat, Poly-(C₂-C₄)-alkylensuccinat, Polylactid, Polycaprolacton und Polyhydroxybutanoat sowie deren Stereoisomere und Copolymere,
wobei die Summe der Komponenten B₁), B₂) und B₃) 100 Gew.-% ergibt.

3. Thermoplastische Masse für die Herstellung metallischer oder keramischer Formkörper, enthaltend
A) 40 bis 65 Vol.-% mindestens eines anorganischen sinterbaren Pulvers A
B) 35 bis 60 Vol.-% einer Mischung aus
B₁) 40 bis 95 Gew.-% mindestens eines Polyoxymethylenhomo- oder -copolymerisats;
B₂) 2 bis 60 Gew.-% mindestens eines Polyethers ausgewählt aus: Poly-1,3-dioxolan, Poly-1,3-dioxan, Poly-1,3-dioxepan, Polytetrahydrofuran, Poly-p-dioxanon und deren Copolymeren;
B₃) 2 bis 15 Gew.-% mindestens eines aliphatischen Polyesters ausgewählt aus:
Polyhydroxyalkanoaten enthaltend Struktureinheiten der Formel (I) 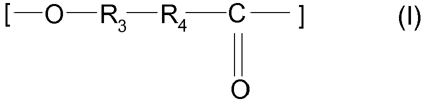 wobei R₃ die Gruppierung -(CH)_{y}(CH₂)ₓCH₃, worin x eine ganze Zahl von 0 bis 2 und y eine ganze Zahl von 0 bis 1 ist, und R₄ die Gruppierung (-CH₂-)_{z}, worin z eine ganze Zahl von 1 bis 5 ist, bedeutet;
Polykondensaten enthaltend Struktureinheiten der Formel (II) 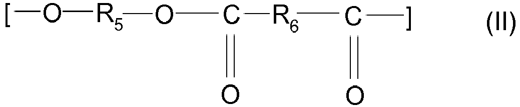
wobei R₅ die Gruppierung (-CH₂-)ₘ, worin m eine ganze Zahl von 2 bis 4 ist,
und R₆ die Gruppierung (-CH₂-)_{n,} worin m eine ganze Zahl von 2 bis 4 ist, bedeutet;
Polyalkylencarbonaten enthaltend Struktureinheiten der allgemeinen Formel (III) 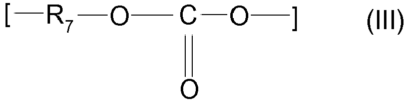 wobei R₇ ein (C₁ - C₆)-Alkylenrest ist,
sowie deren Stereoisomeren und Copolymeren;
und
C) 0 bis 5 Vol.-% eines Dispergierhilfsmittels,
wobei die Summe der Komponenten A), B) und C) 100 Gew.-% ergibt.

4. Thermoplastische Masse gemäß Anspruch 3, **dadurch gekennzeichnet, dass** das anorganische sinterbare Pulver A ausgewählt ist aus Metallpulvern, Metalllegierungspulvern, Metallcarbonylpulvern, keramischen Pulvern und Gemischen davon.

5. Verwendung der thermoplastischen Massen gemäß Anspruch 3 oder 4 zur Herstellung von metallischen oder keramischen Formteilen.

6. Metallisches oder keramisches Formteil, hergestellt aus thermoplastischen Formmassen gemäß Anspruch 3 oder 4.

7. Verfahren zur Herstellung von metallischen oder keramischen Formteilen aus einer thermoplastischen Masse gemäß Anspruch 3 oder 4 durch Spritzgießen, Extrudieren oder Verpressen zu einem Formteil, anschließendes Entfernen des Bindemittels und Sintern, **dadurch gekennzeichnet, dass** man zum Entfernen des Bindemittels das Formteil nach einer der folgenden Varianten behandelt:
• Variante 1 mit den Schritten:
1a) säurekatalysierte Entbinderung der Komponenten B₁ und B₂ aus dem Formteil und
1b) anschließende thermische Entbinderung der Komponenten B₃ und gegebenenfalls C bei 200 - 600°C,
oder
• Variante 2 mit den Schritten:
2a) Extraktion von mindestens 50 Gew.-% der Bindemittelkomponenten B₂) und B₃) und gegebenenfalls C) aus dem Formteil durch ein Lösungsmittel, in welchem die Komponente B₁) unlöslich ist,
2b) Entfernung des Lösungsmittels aus dem Formteil durch Trocknen,
2c) anschließende thermische zumindest teilweise Entbinderung der Komponente B₁) bei 140 - 200°C aus dem Formteil in einer sauerstoffhaltigen Atmosphäre, und
2d) gegebenenfalls thermische Entbinderung bei 200 - 600°C der gegebenenfalls noch vorhandenen Restmengen der Komponenten B₁), B₂), B₃) und/oder C),
oder
• Variante 3 mit den Schritten:
3a) zumindest teilweise Extraktion der Bindemittelkomponenten B₂) und B₃) und gegebenenfalls C) aus dem Formteil durch ein Lösungsmittel, in welchem die Komponente B₁) unlöslich ist,
3b) Entfernung des Lösungsmittels aus dem Formteil durch Trocknen,
3c) anschließende säurekatalysierte zumindest teilweise Entbinderung der Komponente B₁) und Restmengen von Komponente B₂) aus dem Formteil und
3d) gegebenenfalls thermische Entbinderung bei 200 - 600°C der gegebenenfalls noch vorhandenen Restmengen der Komponenten B₁), B₂), B₃) und/oder C).

## Claims

1. A binder B for production of ceramic or metallic moldings, comprising
B₁) 40 to 95% by weight of at least one polyoxymethylene homo- or copolymer,
B₂) 2 to 60% by weight of at least one polyether selected from poly-1,3-dioxolane, poly-1,3-dioxane, poly-1,3-dioxepane, polytetrahydrofuran, poly-p-dioxanone and copolymers thereof,
B₃) 2 to 15% by weight of at least one aliphatic polyester selected from:
polyhydroxyalkanoates comprising structural units of the formula (I) 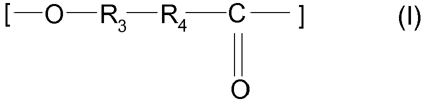 where R₃ is the - (CH)_{y}(CH₂)ₓCH₃ moiety in which x is an integer from 0 to 2 and y is an integer from 0 to 1, and R₄ is the (-CH₂-)_{z} moiety in which z is an integer from 1 to 5;
polycondensates comprising structural units of the formula (II) 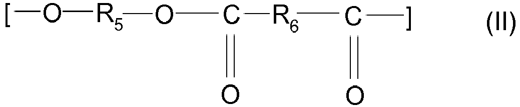 where R₅ is the (-CH₂-)ₘ moiety in which m is an integer from 2 to 4, and R₆ is the (-CH₂-)ₙ moiety in which m is an integer from 2 to 4;
polyalkylene carbonates comprising structural units of the general formula (III) 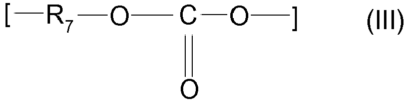
where R₇ is a (C₁ - C₆) -alkylene radical;
and the stereoisomers and copolymers thereof,
where the sum of components B₁) , B₂) and B₃) adds up to 100% by weight.

2. The binder B according to claim 1, comprising
B₁) 50 to 90% by weight of at least one polyoxymethylene homo- or copolymer;
B₂) 5 to 50% by weight of at least one polyether selected from poly-1,3-dioxolane, poly-1,3-dioxepane and polytetrahydrofuran, and copolymers thereof,
B₃) 3 to 12% by weight of at least one aliphatic polyester selected from:
poly- (C₂-C₄) -alkylene carbonate, poly-(C₂-C₄)-alkylene succinate, polylactide, polycaprolactone and polyhydroxybutanoate, and the stereoisomers and copolymers thereof,
where the sum of components B₁), B₂) and B₃) adds up to 100% by weight.

3. A thermoplastic composition for the production of metallic or ceramic moldings, comprising
A) 40 to 65% by volume of at least one inorganic sinterable powder A
B) 35 to 60% by volume of a mixture of
B₁) 40 to 95% by weight of at least one polyoxymethylene homo- or copolymer,
B₂) 2 to 60% by weight of at least one polyether selected from poly-1,3-dioxolane, poly-1,3-dioxane, poly-1,3-dioxepane, polytetrahydrofuran, poly-p-dioxanone and copolymers thereof,
B₃) 2 to 15% by weight of at least one aliphatic polyester selected from:
polyhydroxyalkanoates comprising structural units of the formula (I) 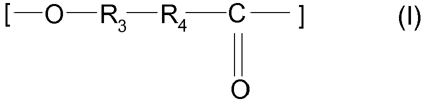 where R₃ is the -(CH)_{y}(CH₂)ₓCH₃ moiety in which x is an integer from 0 to 2 and y is an integer from 0 to 1, and R₄ is the (-CH₂-)_{z} moiety in which z is an integer from 1 to 5;
polycondensates comprising structural units of the formula (II) 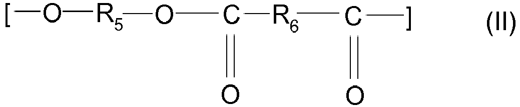 where R₅ is the (-CH₂-)ₘ moiety in which m is an integer from 2 to 4, and R₆ is the (-CH₂-)ₙ moiety in which m is an integer from 2 to 4;
polyalkylene carbonates comprising structural units of the general formula (III) 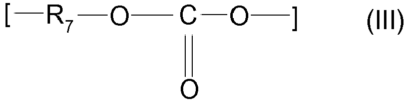 where R₇ is a (C₁ - C₆)-alkylene radical;
and the stereoisomers and copolymers thereof; and
C) 0 to 5% by volume of a dispersing aid,
where the sum of components A), B) and C) adds up to 100% by weight.

4. The thermoplastic composition according to claim 3, wherein the inorganic sinterable powder A is selected from metal powders, metal alloy powders, metal carbonyl powders, ceramic powders and mixtures thereof.

5. The use of the thermoplastic compositions according to claim 3 or 4 for production of metallic or ceramic moldings.

6. A metallic or ceramic molding produced from thermoplastic molding compositions according to claim 3 or 4.

7. A process for producing metallic or ceramic moldings from a thermoplastic composition according to claim 3 or 4 by injection molding, extrusion or compression to give a molding, then removing the binder and sintering, wherein the binder is removed by treating the molding according to one of the following variants:
• Variant 1 comprising the steps of:
1a) acid-catalyzed debinding of components B₁ and B₂ from the molding and
1b) subsequent thermal debinding of components B₃ and, if present, C at 200-600°C,
or
• Variant 2 comprising the steps of:
2a) extraction of at least 50% by weight of binder components B₂) and B₃) and, if present, C) from the molding by a solvent in which component B₁) is insoluble,
2b) removal of the solvent from the molding by drying,
2c) subsequent thermal at least partial debinding of component B₁) at 140-200°C from the molding in an oxygenous atmosphere and
2d) optional thermal debinding at 200-600°C of any residual amounts of components B₁) , B₂), B₃) and/or C) still present,
or
• Variant 3 comprising the steps of:
3a) at least partial extraction of binder components B₂) and B₃) and, if present, C) from the molding by a solvent in which component B₁) is insoluble,
3b) removal of the solvent from the molding by drying,
3c) subsequent acid-catalyzed at least partial debinding of component B₁) and residual amounts of component B₂) from the molding, and
3d) optional thermal debinding at 200-600°C of any residual amounts of components B₁), B₂), B₃) and/or C) still present.

## Revendications

1. Liant B pour la fabrication de corps moulés céramiques ou métalliques contenant :
B₁) 40 à 95 % en poids d'au moins un homo- ou copolymère de polyoxyméthylène,
B₂) 2 à 60 % en poids d'au moins un polyéther choisi parmi le poly-1,3-dioxolane, le poly-1,3-dioxane, le poly-1,3-dioxépane, le polytétrahydrofurane, la poly-p-dioxanone et leurs copolymères,
B₃) 2 à 15 % en poids d'au moins un polyester aliphatique choisi parmi :
les polyhydroxyalcanoates contenant des unités structurales de formule (I) 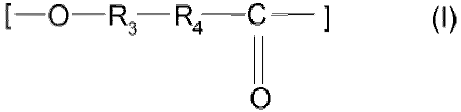 dans laquelle R₃ signifie le groupe - (CH)_{y}(CH₂)ₓCH₃, x étant un nombre entier de 0 à 2 et y un nombre entier de 0 à 1, et R₄ signifie un groupe (-CH₂-)_{z}, z étant un nombre entier de 1 à 5 ;
les polycondensats contenant des unités structurales de formule (II) 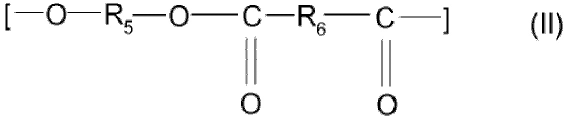 dans laquelle R₅ signifie le groupe (-CH₂-)ₘ, m étant un nombre entier de 2 à 4, et R₆ signifie le groupe (-CH₂-)ₙ, n étant un nombre entier de 2 à 4 ;
les carbonates de polyalkylène contenant des unités structurales de formule générale (III) 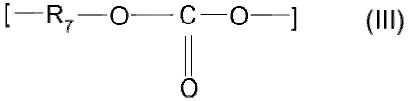
dans laquelle R₇ est un radical alkylène en (C₁-C₆) ;
ainsi que leurs stéréoisomères et copolymères,
la somme des composants B₁), B₂) et B₃) étant de 100 % en poids.

2. Liant B selon la revendication 1, contenant :
B₁) 50 à 90 % en poids d'au moins un homo- ou copolymère de polyoxyméthylène,
B₂) 5 à 50 % en poids d'au moins un polyéther choisi parmi le poly-1,3-dioxolane, le poly-1,3-dioxépane et le polytétrahydrofurane et leurs copolymères,
B₃) 3 à 12 % en poids d'au moins un polyester aliphatique choisi parmi :
le polycarbonate d'alkylène en (C₂-C₄), le polysuccinate d'alkylène en (C₂-C₄), le polylactide, la polycaprolactone et le polyhydroxybutanoate, ainsi que leurs stéréoisomères et copolymères,
la somme des composants B₁), B₂) et B₃) étant de 100 % en poids.

3. Matériau thermoplastique pour la fabrication de corps moulés métalliques ou céramiques, contenant :
A) 40 à 65 % en volume d'au moins une poudre frittable inorganique A,
B) 35 à 60 % en volume d'un mélange de
B₁) 40 à 95 % en poids d'au moins un homo- ou copolymère de polyoxyméthylène,
B₂) 2 à 60 % en poids d'au moins un polyéther choisi parmi : le poly-1,3-dioxolane, le poly-1,3-dioxane, le poly-1,3-dioxépane, le polytétrahydrofurane, la poly-p-dioxanone et leurs copolymères,
B₃) 2 à 15 % en poids d'au moins un polyester aliphatique choisi parmi :
les polyhydroxyalcanoates contenant des unités structurales de formule (I) 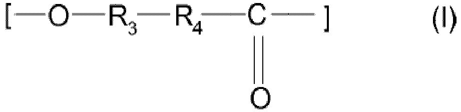 dans laquelle R₃ signifie le groupe -(CH)_{y}(CH₂)ₓCH₃, x étant un nombre entier de 0 à 2 et y un nombre entier de 0 à 1, et R₄ signifie un groupe (-CH₂-)_{z}, z étant un nombre entier de 1 à 5 ;
les polycondensats contenant des unités structurales de formule (II) 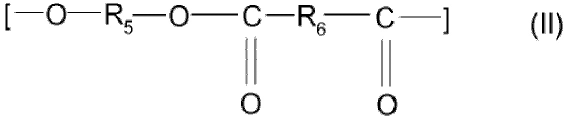 dans laquelle R₅ signifie le groupe (-CH₂-)ₘ, m étant un nombre entier de 2 à 4, et R₆ signifie le groupe (-CH₂-)ₙ, n étant un nombre entier de 2 à 4 ;
les carbonates de polyalkylène contenant des unités structurales de formule générale (III) 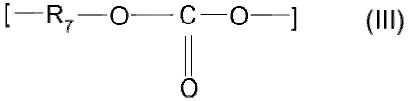 dans laquelle R₇ est un radical alkylène en (C₁-C₆) ; ainsi que leurs stéréoisomères et copolymères,
et
C) 0 à 5 % en volume d'un adjuvant de dispersion,
la somme des composants A), B) et C) étant de 100 % en poids.

4. Matériau thermoplastique selon la revendication 3, **caractérisé en ce que** la poudre frittable inorganique A est choisie parmi les poudres de métaux, les poudres d'alliages de métaux, les poudres de carbonyles de métaux, les poudres céramiques et leurs mélanges.

5. Utilisation des matériaux thermoplastiques selon la revendication 3 ou 4 pour la fabrication de pièces moulées métalliques ou céramiques.

6. Pièce moulée métallique ou céramique, fabriquée à partir de matériaux de moulage thermoplastiques selon la revendication 3 ou 4.

7. Procédé de fabrication de pièces moulées métalliques ou céramiques à partir d'un matériau thermoplastique selon la revendication 3 ou 4 par moulage par injection, extrusion ou compression en une pièce moulée, puis élimination du liant et frittage, **caractérisé en ce que**, pour l'élimination du liant, la pièce moulée est traitée selon l'une des variantes suivantes :
- la variante 1 comprenant les étapes suivantes :
1a) la dissociation sous catalyse acide des composants B₁ et B₂ de la pièce moulée, puis
1b) la dissociation thermique des composants B₃ et éventuellement C à une température de 200 à 600 °C,
ou
- la variante 2 comprenant les étapes suivantes :
2a) l'extraction d'au moins 50 % en poids des composants du liant B₂) et B₃) et éventuellement C) de la pièce moulée par un solvant dans lequel le composant B₁) est insoluble,
2b) l'élimination du solvant de la pièce moulée par séchage, puis
2c) la dissociation thermique au moins partiel du composant B₁) à une température de 140 à 200 °C de la pièce moulée dans une atmosphère contenant de l'oxygène, et
2d) éventuellement la dissociation thermique à une température de 200 à 600 °C des quantités résiduelles éventuellement encore présentes des composants B₁), B₂), B₃) et/ou C),
ou
- la variante 3 comprenant les étapes suivantes :
3a) l'extraction au moins partielle des composants du liant B₂) et B₃) et éventuellement C) de la pièce moulée par un solvant dans lequel le composant B₁) est insoluble,
3b) l'élimination du solvant de la pièce moulée par séchage, puis
3c) la dissociation au moins partiel sous catalyse acide du composant B₁) et des quantités résiduelles du composant B₂) de la pièce moulée et
3d) éventuellement la dissociation thermique à une température de 200 à 600 °C des quantités résiduelles éventuellement encore présentes des composants B₁), B₂), B₃) et/ou C).
